(19) Europäisches Patentamt
European Patent Office
Office européen des brevets

(11) **EP 3 428 862 A1**

(12) **EUROPEAN PATENT APPLICATION**
published in accordance with Art. 153(4) EPC

(43) Date of publication:
**16.01.2019 Bulletin 2019/03**

(21) Application number: **17763620.6**

(22) Date of filing: **10.03.2017**

(51) Int Cl.:
**G06Q 10/10** (2012.01)  **G06Q 40/00** (2012.01)
**G06Q 10/06** (2012.01)  **G06F 17/30** (2019.01)

(86) International application number:
**PCT/KR2017/002646**

(87) International publication number:
**WO 2017/155360 (14.09.2017 Gazette 2017/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.03.2016 KR 20160029081**

(71) Applicant: **Lee, Deok Ku**
**Seoul 04409 (KR)**

(72) Inventor: **Lee, Deok Ku**
**Seoul 04409 (KR)**

(74) Representative: **Perronace, Andrea et al**
**Jacobacci & Partners S.p.A.**
**Via Tomacelli, 146**
**00186 Roma (IT)**

(54) **ACCOUNTING PROCESSING METHOD AND ACCOUNTING PROCESSING SYSTEM, WHICH USE INTEGRATED TRIAL BALANCE**

(57) Provided is a method for an accounting process using an integrated trial balance executed by a processor, including: presenting the integrated trial balance, the integrated trial balance including a first column and a second column, the first column displaying information on an asset, the second column displaying information on a liability and a capital, the information on the asset, the liability, and the capital share including accounts corresponding to each element, and the capital share and values associated with each account title, receiving an account select signal selecting one of the accounts displayed in the integrated trial balance and presenting transaction types for the selected account titles based on a predetermined accounting rule table, the accounting rule table including possible transaction types according to the accounts and information on fixed recording contents according to a combination of the accounts and the transaction types, receiving a transaction type select signal selecting one of the presented transaction types, and presenting a transaction information input screen generated depending on the accounting rule table based on the selected account titles and transaction type, the transaction information input screen including a debit side and a credit side and the fixed recording contents determined depending on the accounting rule table being input to at least one of the debit side and the credit side in advance and being displayed.

【Figure 5】

**Description**

[Technical Field]

The present disclosure relates to a method and an apparatus for an accounting process, and more particularly, to a method and an apparatus for an accounting process using an integrated trial balance.

[Background Art]

Modern accounting established by Luca Pacioli in the 15th century has played a considerable role in company development. In recent years, with the development of a computer, computerized accounting apparatuses are more getting popular. However, despite of the development of a computer, the existing accounting programs simply imitate pages of a traditional accounting ledger and display them on a computer screen. That is, the existing accounting programs merely input contents that used to be recorded on paper through a computer, and therefore users are in almost full charge of inputting data like transactional information.

Therefore, even though users use the existing accounting programs, books recorded by the users with no professional accounting knowledge have many errors which do not conform to accounting rules. Therefore, even though the users use the existing accounting programs, it is extremely difficult to do accounting business without an exclusive knowledge of accounting.

[Disclosure]

[Technical Problem]

The present disclosure relates to a method and an apparatus for an accounting process using an integrated trial balance.

[Technical Solution]

A method for an accounting process using an integrated trial balance executed by a processor, comprises: presenting the integrated trial balance, the integrated trial balance including a first column and a second column, the first column displaying information on an asset, the second column displaying information on a liability and a capital, the information on the asset, the liability, and the capital including account titles belonging to the asset, the liability, and the capital and values associated with each account title, the integrated trial balance having a recording mode and a settlement mode, if at least some of the account titles on the integrated trial balance are selected in the recording mode, a transaction information input process of the corresponding account title starting, and if at least some of the account titles on the integrated trial balance are selected in the settlement mode, a settlement adjustment process of the corresponding account title starting; receiving a first select signal selecting one of the account titles displayed in the integrated trial balance in the recording mode; presenting transaction types for the selected account titles based on a predetermined account attribute table, the account attribute table including possible transaction types according to the account titles and information on automatic recording contents according to a combination of the account titles and the transaction types; receiving a second select signal selecting one of the presented transaction types; and presenting a transaction information input screen generated depending on the account attribute table based on the selected account titles and transaction type, the transaction information input screen including a debit side and a credit side and the automatic recording contents determined depending on the account attribute table being automatically input to at least one of the debit side and the credit side and being displayed.

An apparatus for an accounting process using an integrated trial balance, comprises: a memory storing an account attribute table including possible transaction types according to account titles and information on automatic recording contents according to a combination of the accounts and the transaction types; and a processor connected to the memory, wherein the processor performs an operation of presenting the integrated trial balance to a user device, the integrated trial balance including a first column and a second column, the first column displaying information on an asset, the second column displaying information on a liability and a capital, the information on the asset, the liability, and the capital including account titles belonging to the asset, the liability, and the capital and values associated with each account title, the integrated trial balance having a recording mode and a settlement mode, if at least some of the account titles on the integrated trial balance are selected in the recording mode, a transaction information input process of the corresponding account title starting, and if at least some of the account titles on the integrated trial balance are selected in the settlement mode, a settlement adjustment process of the corresponding account title starting, and the processor performs an operation of receiving a select signal selecting one of the account titles and one of the transaction types of the corresponding account title displayed in the integrated trial table in the recording mode and presenting a transaction information input screen generated according to the account attribute table based on the selected account titles and transaction types, the transaction information input screen including a debit side and a credit side and the automatic recording contents determined depending on the account attribute table being automatically input to at least one of the debit side and the credit side and being displayed.

[Advantageous Effects]

Provision of the above-described method and apparatus may enable users who have insufficient accounting knowledge to skillfully perform the accounting work.

Provision of the above-described method and apparatus may also improve user convenience.

[Description of Drawings]

FIG. 1 is a diagram illustrating a general accounting process of the existing accounting program.

FIG. 2 is a diagram illustrating a general statement input screen of the existing accounting program.

FIG. 3 is a diagram illustrating a total trial balance of the existing accounting program.

FIG. 4 is a diagram illustrating an accounting process of an accounting program according to an exemplary embodiment of the present disclosure.

FIG. 5 is a diagram illustrating an integrated trial balance screen of an accounting program according to an exemplary embodiment of the present disclosure.

FIG. 6 is a block diagram of an apparatus for an accounting program according to an exemplary embodiment of the present disclosure.

FIGs. 7 to 14 are diagrams illustrating a method of managing a promissory note in the apparatus for an accounting process according to various embodiments of the present disclosure.

FIGs. 15 to 18 are diagrams illustrating a method of driving an apparatus for an accounting process according to various embodiments of the present disclosure.

FIG. 19 is a diagram illustrating screens of cases in which acquisition or disposal of short-term financial instruments is selected in the accounting program according to an exemplary embodiment of the present disclosure.

FIG. 20 is a diagram illustrating screens depending on a settlement adjustment type when the settlement of the short-term financial instruments is adjusted in the accounting program according to an exemplary embodiment of the present disclosure.

FIG. 21 is a diagram illustrating screens of cases in which acquisition or disposal of machinery and fixed equipment is selected in the accounting program according to an exemplary embodiment of the present disclosure.

FIG. 22 is a diagram illustrating screens of cases in which a purchase of raw materials is selected in the accounting program according to an exemplary embodiment of the present disclosure.

FIG. 23 is a diagram for describing screens of detailed information that may be derived from an integrated trial balance of the accounting program according to an exemplary embodiment of the present disclosure.

FIG. 24 is a diagram for describing screens that may be displayed upon a settlement mode in the integrated trial balance of the accounting program according to an exemplary embodiment of the present disclosure.

[Mode for Invention]

Hereinafter, exemplary embodiments of the present disclosure will be described in detail with reference to the accompanying drawings. Although the following text sets forth a detailed description of numerous different embodiments, it should be understood that the legal scope of the description is defined by the words of the claims set forth at the end of this application. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims. It should also be understood that, unless a term is expressly defined in this application, there is no intent to limit the meaning of that term, either expressly or by implication, beyond its plain or ordinary meaning.

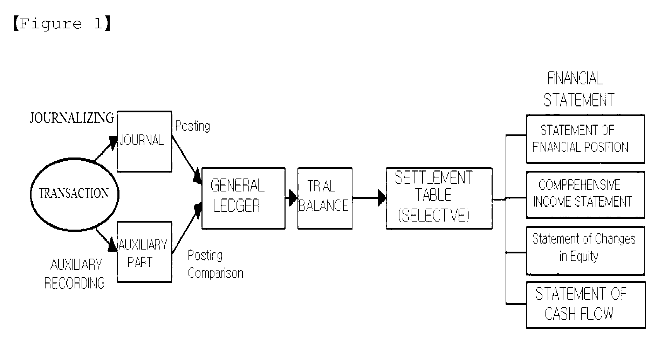

FIG. 1 is a diagram illustrating a general accounting process of the existing accounting program.

A general accounting process will be briefly described as follows. i) Accrual of transaction, ii) Journalizing of transaction and record of journal, iii) Posting to general ledger, and iv) Term-end account (book closing and preparation of financial statements).

When transactions occur, the transactions are recorded in a journal in order. Considerable accounting knowledge is required to determine which account title should be used, which account has corresponding relation and which account goes to which side of the debt side and the credit side for the transaction.

For example, it is assumed that Mr. A invests 1,000,000 won on February 1 to open Alpha company and purchases equipment of 500,000 on February 2 on credit. The journal needs to be recorded as follows.

[Table 1]

| Journal | | | | |
|---|---|---|---|---|
| Date | Description | Ledger No. | Debit Side | Credit Side |
| February 1 | Cash<br>　　　　　Capital<br>　　　　　Share<br>Invest cash to open company | 1<br>40 | 1,000,000 | 1,000,000 |
| February 2 | Equipment<br>　　　　　Others<br>　　　　　payable<br>Purchase equipment on credit | 15<br>26 | 500,000 | 500,000 |
| February 3 | Rent<br>　　　　　Cash<br>Pay rent | 62<br>1 | 400,000 | 400,000 |

Generally, the journalizing of the journal needs to be post as the general ledger. The ledger posting may set the effect of journalized transactions in an individual account. The journalizing of the above Table 1 is posted to the general ledger depending on the respective accounts as follows.

[Table 2]

| General Ledger | | | | | | | |
|---|---|---|---|---|---|---|---|
| Cash | | | | | | | No. 1 |
| Date | Descrip tion | Ledger No. | Amount | Date | Descrip tion | Ledger No. | Amount |
| Feb. 1 | Capital | 1 | 1,000,00 0 | Feb. 3 | Rent | 1 | 400,000 |
| Equipment | | | | | | | No. 15 |
| Date | Descri ption | Ledger No. | Amount | Date | Descri ption | Ledger No. | Amount |
| Feb. 2 | Others payabl e | 1 | 500,00 0 | | | | |
| Others payable | | | | | | | No. 26 |
| Date | Descri ption | Ledger No. | Amount | Date | Descri ption | Ledger No. | Amount |
| | | | | Feb. 2 | Equipm ent | 1 | 500,00 0 |
| Capital | | | | | | | No. 40 |
| Date | Descri ption | Ledger No. | Amount | Date | Descri ption | Ledger No. | Amount |
| | | | | Feb. 1 | Cash | 1 | 1, 000, 000 |
| Rent | | | | | | | No. 62 |
| Date | Descripti on | Ledger No. | Amount | Date | Desc ript ion | Ledger No. | Amount |
| Feb. 3 | Cash | 1 | 400,000 | | | | |

The above record is continued during the accounting period and the term-end account is performed at the end of the accounting period. The settlement (term-end account) closes various kinds of ledgers recorded during the period and prepares financial statements. During the settlement procedure, a trial balance is prepared.

The trial balance (T/B) is an account balance list at a specific time. The trial balance is to inspect whether the debit side conforms to the credit side after the posting. In sophisticated business accounting, errors may occur in the journalizing record or the ledger posting, and therefore the trial balance needs to be prepared. The trial balance prepared for the settlement may be diverse, but a total trial balance will be described as an example herein. For example, the total trial balance depending on the above Tables 1 and 2 is shown as follows.

[Table 3]

| Total Trial Balance February 29, 2016 | | | | | |
|---|---|---|---|---|---|
| Debit Side | | Ledge r No. | Account Title | Credit Side | |
| Balance | Total | | | Balance | Total |
| 600,000 | 1,000,000 | 1 | Cash | | 400,000 |
| 500,000 | 500,000 | 15 | Equipment | | |
| | | 26 | Others payable | 500,000 | 500,000 |
| | | 40 | Capital Share | 1,000,00 0 | 1,000,00 0 |
| 400,000 | 400,000 | 62 | Rent | | |
| 1,500,000 | 1,900,000 | | | 1,500,00 0 | 1,900,00 0 |

If the total amount of the debit side and the total amount of the credit side in the trial balance do not conform to each other, an accounting process performer investigates in which record and calculation errors are present When errors are not present in the trial balance, a statement of financial position and a comprehensive income statement may be prepared based on the trial balance.

The foregoing accounting process is performed even before the computerization and the existing computerized accounting program has been created by imitating the order of the foregoing accounting process.

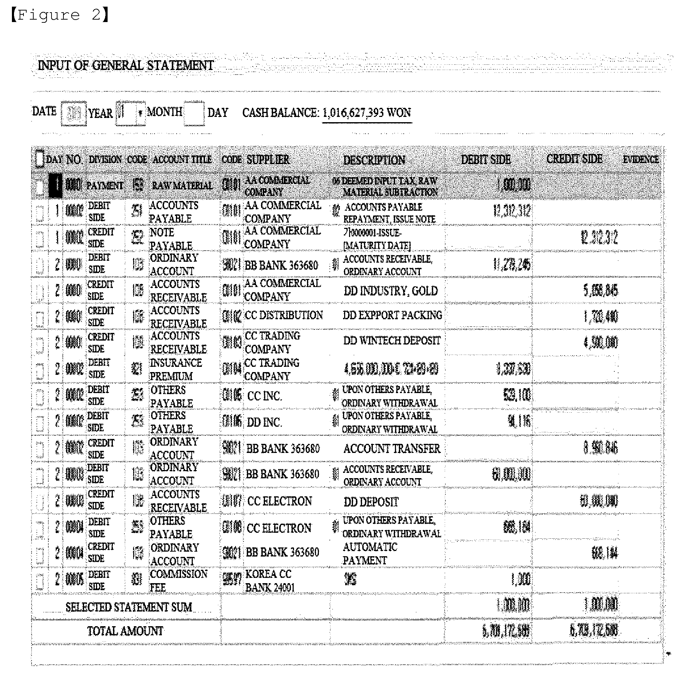

FIG. 2 is a diagram illustrating a general statement input screen of the existing accounting program.

The existing accounting program presents a general statement input screen shown in Fig. 2 or a purchase and sales statement input screen to a user after a log-in of a company registration and a user account. The existing accounting program is to allow a user to input transaction contents to a book in a row depending on the typical accounting process. In the screen configuration, transactions are only arranged long and financial information of an enterprise at a time is not displayed on a computer screen. By the screen configuration as illustrated in FIG. 2, it is very difficult to obtain knowledge about financial situations such as asset, liability, capital, a revenue, and cost that are accounting elements of an enterprise.

Further, a user needs to know variety of account titles which may be recorded and codes therefor and needs to understand which account title has which corresponding relation to other accounts and which account goes to which of the debit side or the credit side for the transaction. Therefore, when the accounting knowledge and ability of the user are insufficient, the recording may not be made properly according to rules of the double-entry bookkeeping system. That is, the typical accounting program does not guarantee the recording conforming to the rules of the double-entry bookkeeping system and does not reasonably guide the user in that manner.

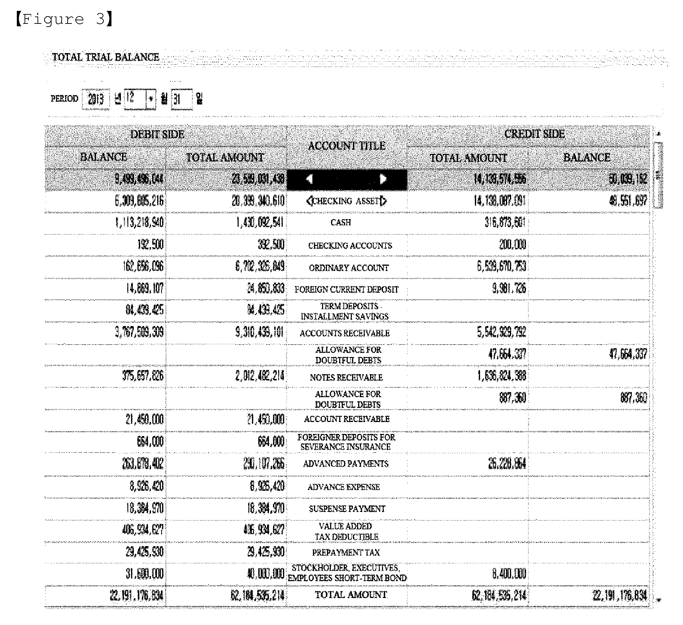

FIG. 3 is a diagram illustrating a total trial balance of the existing accounting program.

Based on the input general statement information and purchase and sales statement information, a total trial balance may be displayed on the screen as illustrated in FIG. 3. The screen configuration follows the typical method for an accounting process before being computerized and is to simply move ones on paper to the computer screen.

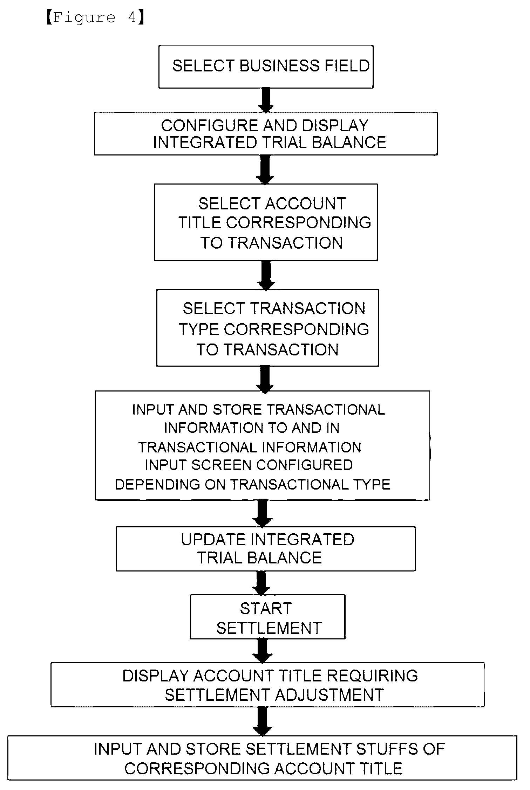

FIG. 4 is a diagram illustrating an accounting process of an accounting program according to an exemplary embodiment of the present disclosure.

According to the present disclosure, if the accounting program is executed, the user account may be generated and the company information may be input. As the company information, information on a company name, a representative name, a corporation or not, industries (service business, manufacturing business, distribution business, etc.), an export or not, a business center / branch, a fiscal year, a corporate / corporation registration number, etc. may be input. When industries or business fields (for example, service business, distribution business, or manufacturing business) are selected, the integrated trial balance including the account titles generally used in each business field is generated and presented depending on the selected business field. Before the integrated trial balance is generated, a list of the account titles belonging to asset, liability, capital, revenue, cost, and manufacturing cost may be presented along with identification (whether to be displayed in the integrated trial balance) proposed by the program and may also be formed to be selected, released, and adjusted by the user. The adjustment may be made by a set up or a change during the accounting period. The account titles to be displayed in the integrated trial balance according to the business field are previously defined and stored in the database of the accounting program according to the present disclosure. For example, when the manufacturing business is selected, the integrated trial balance additionally including the information on account titles such as a raw material, raw material cost, and other manufacturing cost and values associated with the account titles is configured to be presented on the screen. The user may more easily understand financial information of an enterprise using the integrated trial balance that integrally displays the financial information on one screen. Meanwhile, if necessary, the user may be separately allocated with authority to add account titles other than a predefined account title or delete account tiles that are not used.

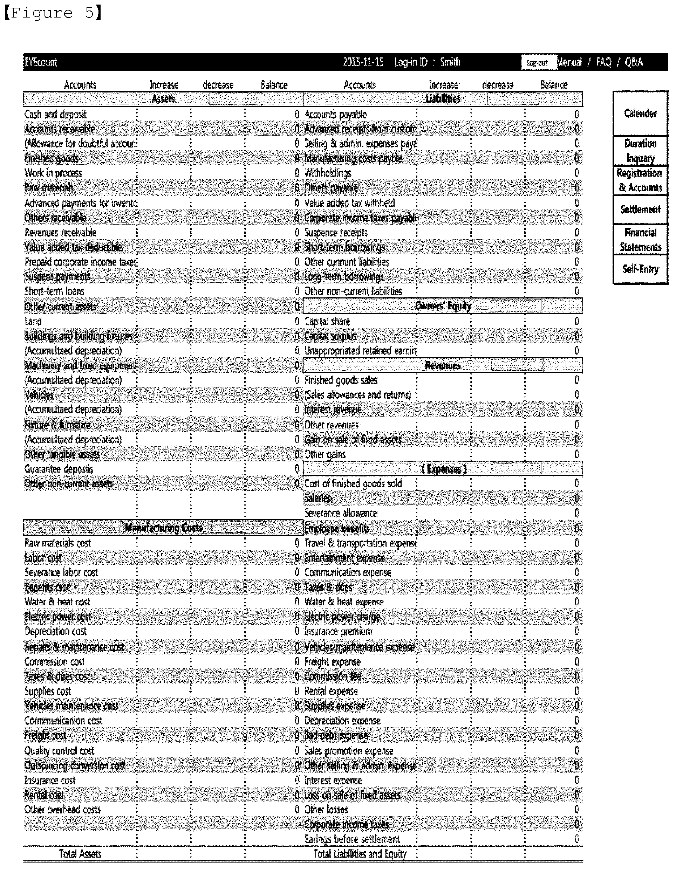

Here, the "integrated trial balance" means a table uniquely devised in the present disclosure that allows an input of transaction information while showing the financial information of the enterprise. FIG. 5 is a diagram illustrating an integrated trial balance screen of an accounting program according to an exemplary embodiment of the present disclosure. The integrated trial balance includes at least a first column and a second column. The information on assets may be displayed in the first column and the information on liabilities and capitals may be displayed in the second column. The information on the assets, liabilities, and capitals includes the account titles corresponding to each element (assets, liabilities, capitals) and values associated with each account title. The values associated with the account titles may include an increase value, a decrease value, and/or a balance for a specific period of the corresponding account titles. A sum of the values associated with the account titles of the first column and a sum of the values associated with the account titles of the second column need to be equal to each other and if they do not conform to each other, an alarm may occur. When a business field is selected as the manufacturing business, the account titles associated with the assets and the manufacturing cost may be displayed in the first column. The account titles associated with the manufacturing costs may include raw material cost, labor cost, severance labor cost, employee benefits cost, etc. The account titles associated with the liability, the capital, the cost, and the revenue may be displayed in the second column. In this case, the values associated with the liability, the capital, and the revenue are summed with each other in the second column and the values associated with costs need to be subtracted and thus the sums in the first column and the second column will conform to each other.

The integrated trial balance may have two modes of a recording mode to which the generated transactions are input and a settlement mode for a term-end account. What the integrated trial balance has the two modes means that the operation performed when a specific item is selected in the integrated trial balance may be different in the first mode and the second mode. If the account titles on the integrated trial balance are selected in the recording mode, a transaction information input process of the corresponding account title may start and if the account titles on the integrated trial balance are selected in the settlement mode, a settlement adjustment process of the corresponding account title may start. A conversion into the settlement mode of the integrated trial balance may be made by selecting a settlement menu or clicking a settlement button. A benefit before the settlement or a loss before the settlement may be displayed in the integrated trial balance for the accounting period.

For each account title displayed in the integrated trial balance, attributes of each account title are defined in an account attribute table (or account attribute database). For example, the account attribute table may include possible transaction types (in the case of cash and deposits, cash withdrawal, cash deposit, account transfer, and cash short and over), contents and number of the account titles to be displayed in the debit side and the credit side in each transaction type, contents and number (contents and number of items to be additionally input) of attributes included in each account title in the debit side and the credit side, to which of the credit side or the debit side the account titles of each transaction type belong, account type (general, a partial self-input, special self-input, and book input) Further, i) the attributes and the relevant book depending on the transaction type for the accounting period (recording period) and/or ii) the attribute and the relevant book upon the term-end account (settlement period) may be defined in the account attribute table. That is, the account attribute table may define the information to be used/requested upon the transaction input for the accounting period and the information to be used/requested in the settlement adjustment upon the settlement, depending on the combination of account title and transaction type. The attribute definition may be stored in the database of the accounting program in various types and may be updated.

There may be defined in the account attribute table that for example, in the case of the raw material, i) as the attributes depending on the transaction type for a recording period, the raw material and value added tax deductible may be displayed in the debit side upon the purchase, accounts payable may be displayed in the credit side, a space for item may be displayed in the raw material of the debit side, and customers and suppliers need to be additionally input/selected in the accounts payable of the credit side. upon allowance on purchases, the accounts payable may be displayed in the debit side, and the raw material and the value added tax deductible may be displayed in the credit side, spaces for customers and suppliers may be displayed in the accounts payable of the debit side, and a space for item may be additionally filled / selected in the raw material of the credit side. A raw material purchase book and raw material receipts and payments may be defined in the relevant book of the raw material. For the items to be previously input and displayed in the transaction detailed information, displaying the account titles of the debit side upon the purchase of the raw material and the accounts payable in the account title of the credit side may be additionally defined in the account attribute table.

For another example, there may be defined in the account attribute table that in the case of the case and deposits, there are four transaction types of 1) cash withdrawal, 2) cash deposit, 3) account transfer, 4) cash short and over(these transaction types may be added or deleted, but the exemplary embodiments are not limited thereto), in the case of the cash short and over, two account titles (cash and deposits and other losses) may be displayed in the debit side, two account titles (cash and deposits and other gains) may be displayed in the credit side. Each account title further includes an attribute called details in addition to the account title and the amount, the cash and deposits of the cash short and over are displayed in the debit side and the corresponding account type is general.

If a transaction occurs, the user selects the account title associated with the corresponding transaction in the integrated trial balance. For the selected account tile, the transaction type that may be possible in the corresponding account title is presented. If one of the possible transaction types is selected, the transaction information input screen is displayed on a window or a screen depending on the selected transaction type. The debit side and the credit side are displayed on the transaction information input screen depending on the attribute of the selected transaction type and at least account title and an amount blank are generated in each of the debit side and the credit side. According to another exemplary embodiment, the account transaction types depending on the account title are displayed in the integrated trial balance and thus the user may also immediately select one of the transaction types depending on the account title.

For example, if the "raw material" account is selected by the user purchasing the raw material, the possible transaction types (purchase, allowance on purchases, or purchase return) of the raw material are presented. If the user selects the purchase, the transaction information input screen is displayed on a new window or screen. In the transaction information input screen, depending on the attribute of the raw material purchase of the predetermined account attribute table, the account titles, the items, and the amount blank are formed in the debit side and the account titles, the customers and suppliers, and the amount blank are formed in the credit side. The raw material and the value added tax deductible are displayed in the account title of the debit side depending on the predetermined accounting rules and the items and amount of the debit side may be displayed in the blank for the user input. The accounts payable is displayed in the account title of the credit side and the customers and suppliers and the amount of the credit side appears in a blank for the user input. The 'description' may be presented so that the additional matters associated with the transaction may be described in the transaction information input screen. That is, when the purchase of the raw material is selected, the following transaction information input screen may be displayed.

[Table 4]

| Account Title | Item | Amount | Account Title | customers and suppliers | Amount |
|---|---|---|---|---|---|
| Raw material | | | Accounts payable | | |
| Value added tax deductible | | | | Description : | |

The item and the small item title of the customers and suppliers are presented in the above Table 4, but the small item title may be omitted and the item and the customers and suppliers may also be selected to be selected based on the previous recording of the user. Upon the accrual of the transaction, only if the user selects one of the account title and the proposed transaction types corresponding to the transaction in the integrated trial balance provided by the accounting program in the present disclosure, as shown in the above Table 4, the transaction information input screen on which the matters to be input to the debit side and the credit side are at least partially automatically displayed is displayed. The at least partial automatic bookkeeping may be made since in the accounting rule stored in the account attribute table, categories to be input to each of the debit side and the credit side and contents to be input to the corresponding category are determined in advance depending on the transaction type of the selected account title. Therefore, the user is guided to perform the ledger description conforming to the accounting rule without high-level accounting acknowledge.

If the user completes the input for the rest portions to be input on the transaction information input screen, the completion or storage button (or simple input of an enter key) may be selected. When the completion or storage button is clicked, the accounting program in the present disclosure determines whether the total amount of the debit side and the total amount of the credit side conform to each other, or otherwise the completion and the storage may be rejected and the alarm may be generated. Based on the alarm, the user is guided to perform the accurate recording. The alarm comparison and the alarm may also be performed at the moment that a cursor gets out of the corresponding area before the completion or storage button is pressed and after the amount input to the amount blanks of the debit side and the credit side is completed. Alternatively, if all of the minimally required amount blanks of the debit side and the credit side are filled, the rest amount blanks may be automatically input by the accounting program so that the total of the debit side and the total of the credit side conform to each other.

If all the transaction information is accurately input and the storage or completion button is clicked, the integrated trial balance is updated based on the input contents. For example, if 1,000,000 won is input as the purchase of the raw material, the increase (debit side) and the balance of the raw material account title are increased by 1,000,000 won before the description. If the transaction information is input and managed by the foregoing method, the user may always understand the financial state of the enterprise at that time without generating a separate report.

If the settlement is required at the end of the accounting period, the user may click a menu for performing the settlement at the interface of the accounting program. If the settlement menu is selected, a specific display (for example, shadow display) may be made in the account title in which the settlement matters to be necessarily performed are present. If the user clicks the shaded account title, all the processing matters required upon the settlement and the settlement adjustment screen showing the journalizing are displayed. The user may input and store depending on the settlement adjustment screen and then the settlement adjustment for the settlement matters may be performed. The accounting program in the present disclosure may display the order of the settlement adjustment as well as displaying the account title which is to be adjusted upon the settlement. The function may display which of the account titles needs to be first subjected to the settlement adjustment on the integrated trial balance or when the account title of which settlement needs to be adjusted later is selected, may be performed by a method for generating an alarm for the account title that needs to be first adjusted.

For example, upon the settlement of the cash and deposits, the short-term financial instruments, etc., a gain on interest needs to be calculated and upon the settlement of accumulated depreciation of a building, machinery and fixed equipments, vehicles, fixture and furniture, etc., a depreciation is required. Therefore, if the cash and deposits account in which the settlement matters are present is clicked, the following settlement adjustment screen is displayed.

[Table 5]

| Account Title | Cash/Bank Account | Amount | Account Title | Detailed Items | Amount |
|---|---|---|---|---|---|
| Cash and deposits | | | Gain of interest | | |
| | | | | Description : | |

The accounting program of the present disclosure displays the account title requiring the settlement matters when the settlement is performed and the settlement adjustment screen is provided as shown in the above Table 5, thereby guiding the user to progress the settlement adjustment in an appropriate order without omission. Therefore, the accounting program of the present disclosure may prevent a confusion, an omission, and an error that are experienced in most companies upon the settlement.

Meanwhile, the accounting program may be provided with such items as a calendar, term inquiry, registration and account management, settlement, financial statement, cost accounting of service, tax-related questions and answers, self-input windows and any other downloadable item(s), so that related services can be supplied to users.

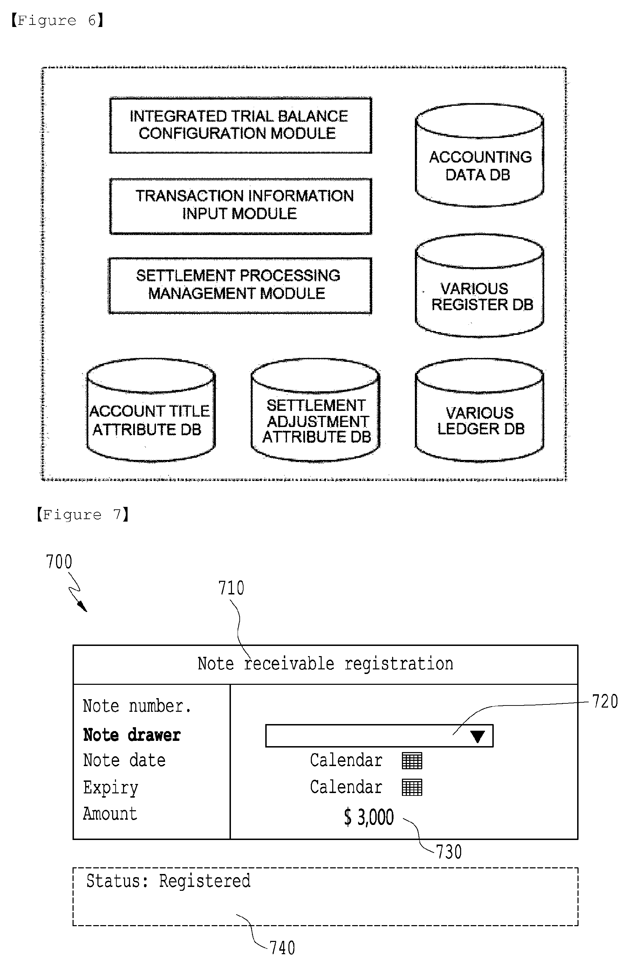

FIG. 6 is a block diagram of an apparatus for an accounting program according to an exemplary embodiment of the present disclosure.

An apparatus for an accounting process may include an integrated trial balance configuration module, a transaction information input module, a settlement management module, an accounting data database (DB), an account title database (DB) per business field, various register databases (DBs), various book databases (DBs), various receipts and payments databases (DBs), and an account attribute database (DB). Further, the apparatus for an accounting process may further include a settlement attribute database (DB) that defines attributes per account title upon the settlement mode. However, the attributes per account title may also be integrated as the account attribute database upon the settlement mode. Meanwhile, the configuration module, the input module, and the management module may be integrated by one or more control means and may also be represented. Further, each database may be locally stored in a computer executing the accounting program and may also be stored in a remote server that may communicate with the computer.

The integrated trial balance configuration module may configure the integrated trial balance that is displayed on a monitor depending on the selection of the business field. The configuration may be made based on the account title DB per business field storing the account titles per business field which will be displayed in the integrated trial balance. The transaction information input module may serve to configure the transaction information input screen depending on the account title and the transaction type on the integrated trial balance selected by the user and process the input transaction information. When the settlement menu is selected, the settlement management module may serve to display the account title requiring the settlement adjustment or display the matters to be input upon the settlement adjustment of the corresponding settlement title. Each module may be functioned by referring to the database in which the information for performing the function is stored.

Transaction information data that are input by the user may be stored in the accounting data DB. Various registration DB may store information on various registrations such as a company registration, an employee registration, a credit card registration, a customers and suppliers registration, a tangible assets registration, a land registration, an investment center registration, a suppliers registration, a machinery and fixed equipments registration, a fixture and furniture registration, and a buildings and building fixtures registration. The company registration may store information on a company name, a representative name, a corporation or not, industries (service business, manufacturing business, distribution business, etc.), an export or not, an investment center / branch, a fiscal year, a corporate / corporation registration number, etc. The information may be required by the user when the accounting program is performed first and may be collected. Various book DBs may store information on various books such as a depreciation book, a raw materials purchase book, a production book, a sales book, and a service export book. The receipts and payments database may store information on the raw material receipts and payments, finished goods receipts and payments, and merchandise receipts and payments. The settlement attribute DB may store information on the account title to be adjusted upon the settlement and matters to be input upon the settlement adjustment of the corresponding account title. The account attribute DB may store information on the category to be input upon the transaction input of each transaction title and matters to be displayed by being input to the debit side and the credit side in advance.

A method of managing a promissory note in an apparatus for an accounting program according to one exemplary embodiment of the present disclosure will be described below, referring to FIGs. 7 to 14.

According to a note drawer, a promissory note can be divided into a note payable and a note receivable. For example, where A and B enter a transaction to pay the price of goods by the promissory note under which if A draws a note for the price of goods supplied from B, A is in debt on the note to B. Conversely, where A supplies goods to B and B draws a note, A has credit on the note to B.

FIG. 7 shows a screen for registering a note receivable. This screen displays information on the note receivable from B when A supplies its goods to B. The apparatus for accounting process displays a note number, note name, customer (by way of example, account, outstanding account or any other account that may be selected), note drawer, note date, expiry date, target currency information, amount information in the note receivable registration 700, or may receive the information input from users. Here, the note number, expiry date, amount and a note drawer may be entered as essential information, but the exemplary embodiments are not limited thereto.

As an account title associated with the note, a progress status information 740 can be stored in the account title attribute table. Where progress status information is stored in an account title associated with the note in the account title attribute table, the apparatus for accounting process shown in FIG. 6 can display the screen of FIG. 7.

The note receivable registration 700 enables users to additionally input the progress status information of the note. The progress status information of the note may include cancellation, registration, use, completion, etc. Only where the progress status information of the note is cancelled or registered, the same screen as in FIG. 7 can be displayed, but the exemplary embodiments are not limited thereto.

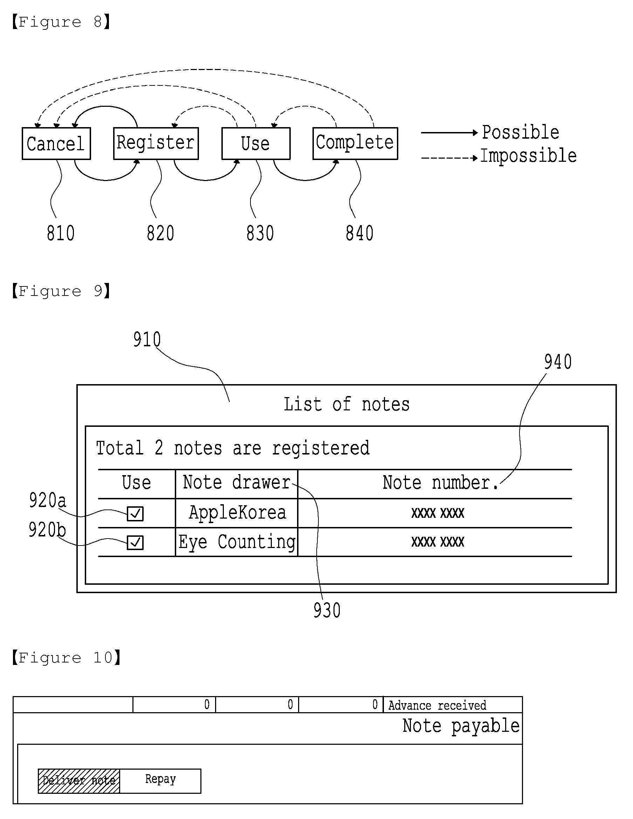

Referring to FIG. 8, the cancellation status 810 indicates that the note is cancelled in a specific state (registration, use, completion). Also, the use status 830 indicates that in case of the note payable, a note is delivered and in case of the note receivable, a note is received. That is, the note is in a state of having been drawn. Thereafter, the note transaction may be cancelled or completed (such as repay, discount, endorse, etc.).

The registration status 820 and the use status 830 may be selected by users.

However, the completion status 840 may not be selected by users. Once the progress status information of the note is changed to the use status 830, the progress status information thereafter may not be changed by users. For example, the registration status 820 may be changed to the cancellation status 810, but the use status 830 and the completion status 840 cannot be changed to the cancellation status 810.

The completion status 840 may include repayment, discount and endorsement, etc. Repayment means a state that the amount corresponding to the note has been paid or the holder has received the amount corresponding to the note, discount means a state that the principle has been paid by a financial institution, exclusive of interest for a predetermined period of time, and endorsement indicates assignment of the note to a third party.

This is to prevent any numerical value of the integrated total balance from being adjusted duplicately where a plurality of users pay the amount corresponding to the note. In the apparatus for an accounting process, completion status of the note can be automatically updated upon receiving completion confirmation information from an external server (a financial server, etc.). Accordingly, a problem of duplicate input after receipt of the note receivable can be solved, and duplicate input of the corresponding note after repayment of the note receivable can be prevented. Also, a problem that the cash amount held exceeds the actually retained amount because several persons input the note receivable duplicately, a problem of short-term liquidity due to a difference in cash between the cash the company holds and the cash that is expected to hold, and a short-term default can be prevented.

The apparatus for an accounting process creates a registration for the concerned financial transaction, and enables the customers to conduct financial transactions safely by setting invisible key values (registration, cancellation, use, completion, etc.).

The apparatus for accounting process can display a list of notes as shown in FIG. 9. Referring to FIG. 9, information of registered notes may be displayed. The apparatus for an accounting process can display a status of use or not 920a and 920b, name of note drawer 930, and note number. In addition, additional information on expiry date, amount, etc. may be displayed, but the exemplary embodiments are not limited thereto.

Here, the status of use or not 920a and 920b may be configured in such a manner that use and completion are not selected by the users, and functions of send behind, send back cancelation status, etc. may be included. The sequence of displaying may be set to be production, registration, use, cancellation, completion, etc., but the exemplary embodiments are not limited thereto.

FIGs. 10 to 14 illustrate examples of implementing the apparatus for an accounting process in relation to the note.

Referring to FIG. 10, the apparatus for an accounting process displays a screen for the note payable. Only deliver note and repay note can be displayed, but the exemplary embodiments are not limited thereto.

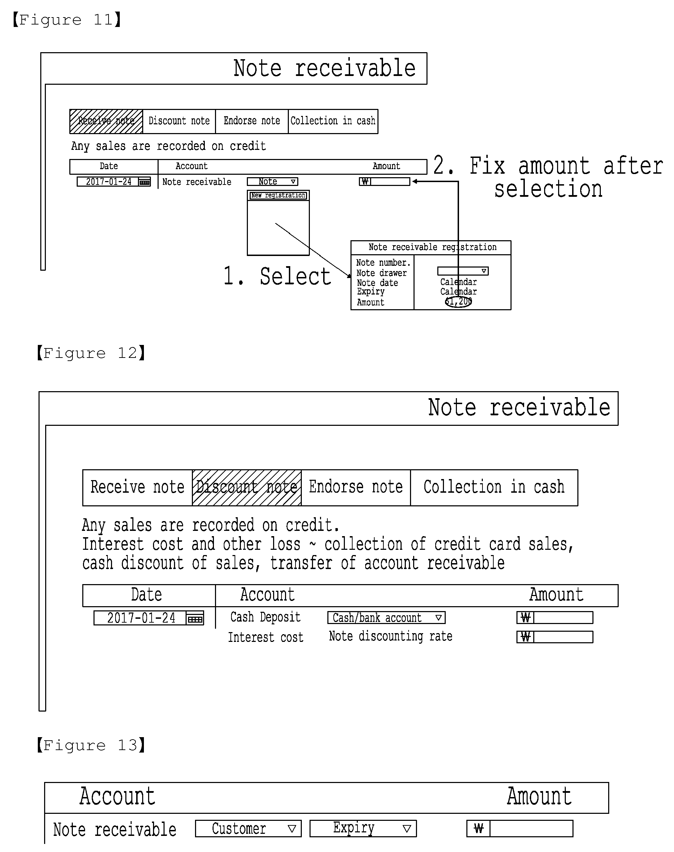

Referring to FIG. 11, the apparatus for an accounting process displays a screen for the note receivable. On the upper portion, items such as receive note, discount note, endorse note, withdraw cash, etc. are disposed. If the note receivable is registered as an account item through the registration process as in FIG. 7, the progress status information can be changed to the use status.

Referring to FIG. 12, the apparatus for an accounting process can display discount of note for the note receivable. Where an event to discount the note automatically occurs, the apparatus for an accounting process can automatically enter a cash deposit and amount of note discount rate, time, etc.

Referring to FIG. 13, where the note receivable is endorsed by another user, the apparatus for an accounting process can display the note drawer, kind of the note (note receivable, note payable, etc.), concerned customer and expiry date, and amount information.

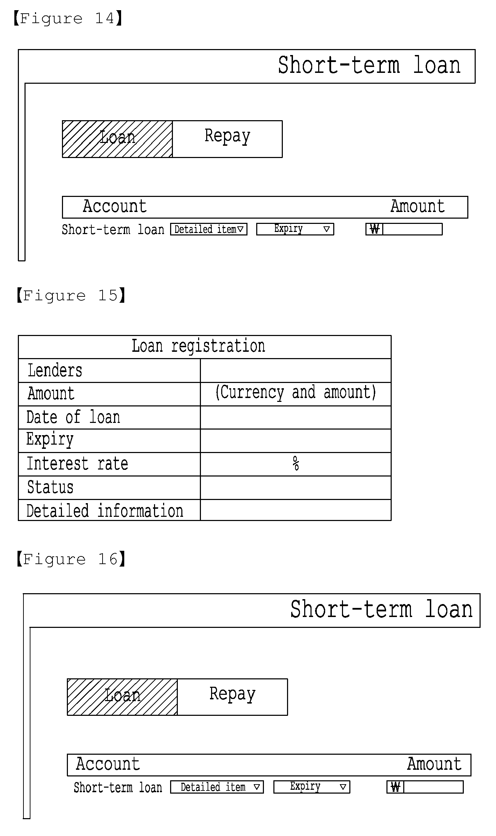

Referring to FIG. 14, where repayment of the note payable is completed, the apparatus for an accounting process may display information associated with the note payable (including information on drawer of note payable, kind of note, supplier, expiry date, etc.). At this time, the apparatus may be configured in such a manner that only a case where the note is in a use state is selected but any other cases are not selected, but the exemplary embodiments are not limited thereto. The description of FIGs. 7 to 14 can also be applied to an electronic promissory note.

In case of a loan, and a long-term or short-term debt, FIGs. 7 to 14 can be applied, similar to the case of the note. Hereinafter, a method of driving the apparatus for an accounting process associated with the loan, and the long-term or short-term debt will be described below, referring to FIGs. 15 to 18.

Referring to FIG. 15, the apparatus for an accounting process can create a loan registration and register a loan. The loan registration may include short-term loan name, trading partner (e.g., employee, business partner, etc. may be selected), other customers, lenders, amount, issue date, loan date, expiry date, interest rate, status information, base currency, amount, detailed information, etc. Here, the status information may include cancellation, registration, use, completion and so on. Completion may cover only repayment, but the exemplary embodiments are not limited thereto. Also, the above-described account title associated with progress status information may include at least one of an account title associated with promissory note, an account title associated with loan, and an account title associated with debt of a predetermined term, but the exemplary embodiments are not limited thereto.

Referring to FIG. 16, the apparatus for an accounting process displays a screen associated with short-term debt. Debt may be selected by users, but repayment may not be selected by users; instead, it may be automatically updated.

As an account type associated with short-term debt, the apparatus for an accounting process may include detailed item, expiry date, amount to be entered, but the exemplary embodiments are not limited thereto.

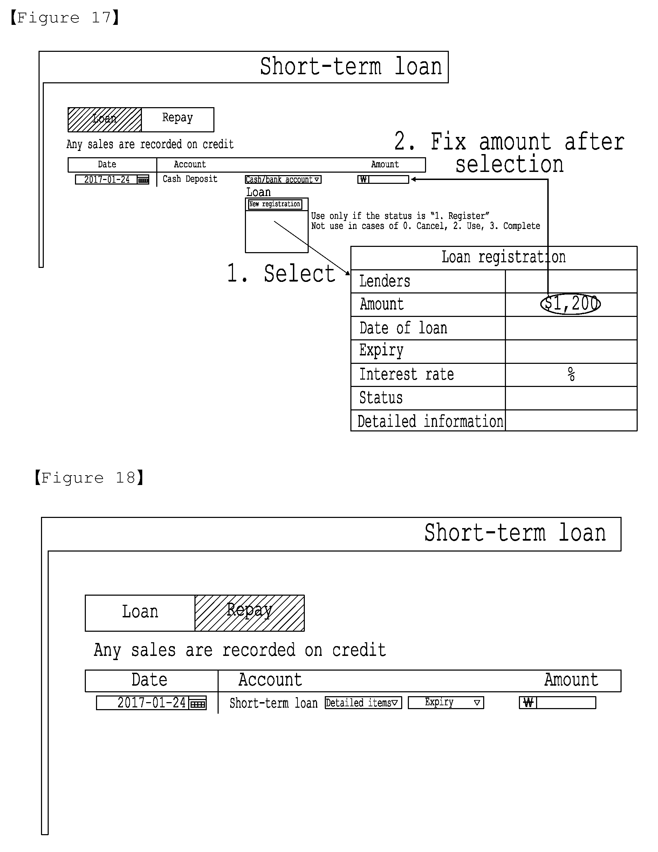

Referring to FIG. 17, a date (January 24, 2017) is first entered, and an account item (cash/deposit) is selected. If an amount is selected, the apparatus for an accounting process enables the amount to be input into the loan registration. However, the apparatus for an accounting process allows only a registration status to be entered, and it can be configured not to be selected by users in case of use or completion. This is to prevent duplicate use and repayment.

Referring to FIG. 18, in case of repayment, the apparatus for an accounting process enables only the use status to be selected by users, but repayment (completion) status cannot be selected by users, but the exemplary embodiments are not limited thereto.

Hereinbelow, an apparatus for an accounting process that performs automatic adjustment of receipts and payments, in which stocking and release of products are arranged, will be described, referring to Tables 6 and 7. For reference, WA (weighted average method), FIFO (first in, first out), LIFO (last in, first out), etc. are used in determining a production (or purchase) price of a product (including goods and raw materials) in a distribution system. Here, it will be described based on the weighted average (WA) method.

Table 6 records stocking and release booking of products in books and receipts and payments of the products according to the conventional method.

[Table 6]

| | Account name | Attribute 1 | Attribute 2 | Amount | Account name | Attribute 1 | Attribute 2 | Amount |
|---|---|---|---|---|---|---|---|---|
| 1 | Product | Produc t A | 100*500,000 | 50,000,000 | Accounts payable | | | 50,000,000 |
| 2 | Product | Produc t A | 50*550,000 | 27,500,000 | Accounts payable | | | 27,500,000 |
| 3 | Accounts | | receivable | 19,116,667 | Product | Product A | 37*516,667 | 19,116,667 |
| | Stocking | | | Release | | | Sum | |
| | Quantity | Unit cost | Amount | Quantity | Unit cost | Amount | Quantity | Unit cost | Amount |
| 1 | 100 | 500,000 | 50,000,000 | | | | 100 | 500,000 | 50,000,000 |
| 2 | 50 | 550,000 | 27,500,000 | | | | 150 | 516,66 6.667 | 77,500,000 |
| 3 | | | | 37 | 516, 667 | 19,116,667 | 113 | 516,667 | 58,383,333 |
| 4 | | | | | | | 113 | 516,667 | 58,383,333 |
| 5 | | | | | | | 113 | 516,667 | 58,383,333 |
| 6 | | | | | | | 113 | 516,667 | 58,383,333 |
| 7 | | | | | | | 113 | 516,667 | 58,383,333 |
| 8 | | | | | | | 113 | 516,667 | 58,383,333 |
| 9 | | | | | | | 113 | 516,667 | 58,383,333 |

In the receipts and payments of the goods in the lower portion of Table 6, the underlined final unit cost is determined in the following expression:

```
Final unit cost = (final amount of current inventory) + (price

stocked  *  stocked  quantity)  -  (price  released  *  released

quantity)/(final  quantity  of  current  inventory  +  stocked

quantity - released quantity)
```

For selling the products, sales cost should be calculated using the final unit cost. However, as the conventional accounting programs have no receipts and payments, it is not possible to readily obtain the sales cost. Further, as in Table 6, where the unit cost includes a decimal point, a problem such that the selling price also includes a decimal point if the sales cost is calculated without any special process may be generated. Considering that the accounting unit is integer, as an error such as discord between a debit side and a credit side is generated, there is a problem such that an integrity error cannot be guaranteed. In the conventional accounting programs, to correct this error, a large number of accounting employees must spend separate time to manually perform the correction work.

Table 7 records stocking and release of the products in receipts and payments and books according to the present disclosure, showing that correction is automatically performed according to the program of the present disclosure.

[Table 7]

|  | Stocking | | | Release | | | Sum | | |
|---|---|---|---|---|---|---|---|---|---|
|  | Quantity | Unit cost | Amount | Quantity | Unit cost | Amount | Quantity | Unit cost | Amount |
| 1 | 100 | 500,000 | 50,000,000 |  |  |  | 100 | 500,000 | 50,000,000 |
| 2 | 50 | 550,000 | 27,500,000 |  |  | 100 | 150 | 516,666.667 | 77,500,000 |
| 3 |  |  |  | 37 | 516,667 | 19,116,642 | 150s | 516,666 | 58,383,258 |
| 4 |  |  |  |  |  |  | 113 | 516,666 | 58,383,258 |
| 5 |  |  |  |  |  |  | 113 | 516,667 | 58,383,258 |

| | Account name | Attribute 1 | Attribute 2 | Amount | Account name | Attribute 1 | Attribute 2 | Amount |
|---|---|---|---|---|---|---|---|---|
| 6 | | | | | | 113 | 516,666 | 58,383,258 |
| 7 | | | | | | 113 | 516,666 | 58,383,258 |
| 8 | | | | | | 113 | 516,666 | 58,383,258 |
| 9 | | | | | | 113 | 516,666 | 58,383,258 |
| 1 | Product | Product A | 100*500,000 | 50,000,000 | Accounts payable | | | 50,000,000 |
| 2 | Product | Product A | 50*550,000 | 27,500,000 | Accounts payable | | | 27,500,000 |
| 4 | Other loss | Difference due to correction of broken number | | 100 | Product | Product A | | 100 |
| 3 | Accounts receivable | | | 19,116,642 | Product | Product A | 37*516,667 | 19,116,667 |

Where the unit cost includes a decimal point as seen in Table 7, the apparatus for an accounting process according to the present disclosure automatically drops the decimal from the unit cost, and thereafter sets an account title as other loss as in Number 3, thereby enabling 100 won to be automatically set and entered as a loss.

According to the accounting program according to the present disclosure executed by a processor, whenever products are stocked (purchase of the products), the final unit cost is calculated and it is determined whether the unit cost includes any decimal point, that is, it is integer. As indicated in the above Table, where the quantity is 150, and a difference in unit cost is generated whenever products are stocked (500,000 won, 550,000 won), a difference in unit cost may be generated. In Table 7, the unit cost is 516,666.667 won.

According to the determination, if the unit cost includes a decimal point value, that is, it is not an integer, a minimum amount to be subtracted from the total amount is calculated so as to make the unit cost an integer (that is, a minimum value to be subtracted from the total amount, or a value of the remainder when a share where the total amount is divided by the total quantity is an integer, to make integer multiple of the total quantity when the total amount is calculated). As an example, 4 decimal places after the decimal point can be dropped from the unit cost of 516,666.667 using a rounddown function (function to remove decimal points or values of a predetermined number).

A value calculated according to the above-described calculation is automatically input into the released amount and subtracted from the total amount, which is processed as other loss. Implementation of the apparatus for an accounting process can comprise steps of calculating the total amount of 77,500,000 won based on the unit cost on which all values of the decimal point are reflected, calculating the total amount of 77,499,000 won based on the unit cost after the values of the decimal point are removed, and calculating the difference of 100 won generated due to the decimal point.

In this case, an amount calculated as other loss (generation of expense; the attribute is difference due to correction of broken numbers) is input into the debit side, and the product (reduction of the asset) of the same amount is input into the credit side. As operation and input according to this rule are automatically performed by the processor, integrity of the accounting book is guaranteed, requiring no separate manual work by accounting employees.

The difference recorded as other loss is due to the broken number. This difference is intuitively determined as loss, but it is a loss recognized by the apparatus, which will be subtracted from the unit cost later, thus constituting no actual loss. The automatic correction as described above may be used in sale returns, purchase returns, purchase allowance, stock due to other cause, etc., but the exemplary embodiments are not limited thereto.

A foreign exchange automatic evaluation system of the apparatus for an accounting process will be described below. The current Korean Financial Law stipulates that current values of asset and liability are both evaluated and are to be announced to the public in a latest state in terms of the rights of the shareholders. This time, where the current values of the inventory assets are lowered as a result of evaluating them, the loss is recorded and is reported to the shareholders. Also, loss or profit is recorded after cashable assets are converted into current values, and is reported to the shareholders. In the instant case, all the financial statements are used.

Whenever a company settles their accounts, the apparatus for an accounting process can reevaluate foreign currencies, foreign currency bonds, foreign currency debt, bank balance in foreign currency, a variety of financial items in foreign currency that the company possesses, based on the current foreign exchange rate. Profit and gains on exchange at the time of revaluating the exchange rate may be displayed, but the exemplary embodiments are not limited thereto.

At the time of first recordation, the apparatus for an accounting process evaluates and records the inventory assets in the current trading currency (in case of the Republic of Korea, Won) using the current exchange rate, which may be reevaluated at the current exchange rate at the end of each term, but the exemplary embodiments are not limited thereto.

For example, the apparatus for an accounting process can construct the debit sides and the credit sides upon settlement as in Tables 8 and 9 (see below).

[Table 8]

| No. | Account name | Attribute 1 | Attribute 2 | Amount |
|-----|--------------|-------------|-------------|--------|
| 1 | Foreign currency translation loss | | | 20,000,000 |
| 2 | Accounts receivable | | | 12,000,000 |
| 3 | Cash | | | 500,000 |

[Table 9]

| No. | Account name | Attribute 1 | Attribute 2 | Amount |
|---|---|---|---|---|
| 1 | Accounts payable | | | 20,000,000 |
| 2 | Foreign currency translation gain | | | 12,000,000 |
| 3 | Foreign currency translation gain | | | 500,000 |

As indicated above in Table 9, the apparatus for an accounting process can automatically generate and manage any fluctuation due to foreign exchanges at the time of settlement.

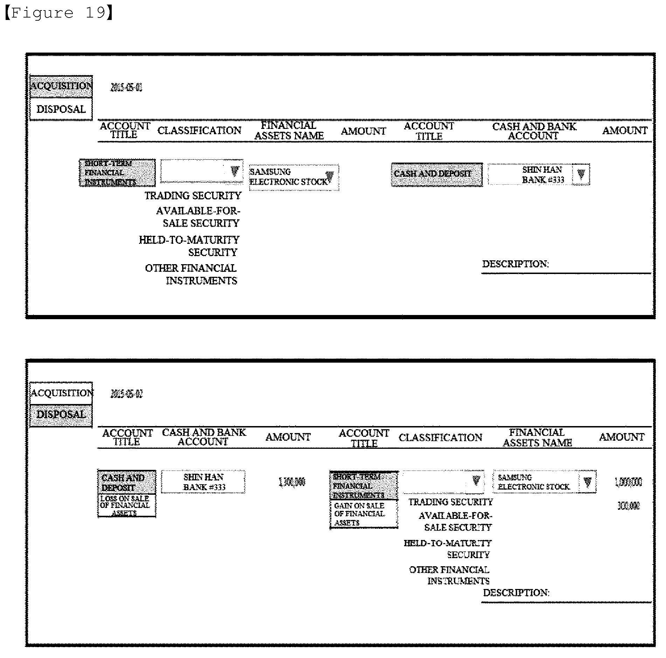

FIG. 19 is a diagram illustrating screens of cases in which acquisition or disposal of short-term financial instruments is selected in the accounting program according to an exemplary embodiment of the present disclosure.

The upper end of FIG. 19 illustrates the transaction information input screen provided when the acquisition of the short-term financial instruments is selected for the accounting period. For the acquisition of the short-term financial instruments, the account attribute table defines the fact that in addition to the account title and the amount, the detailed items and the financial assets name category needs to be generated in the debit side and in addition to the account title and the amount, the cash / bank account category needs to be generated. Further, the account attribute table may define the fact that when the acquisition of the short-term financial instruments, the short-term financial instruments are displayed in the account title of the debit side and the cash and deposits are displayed in the account title of the credit side. When the acquisition of the short-term financial instruments is selected, the detailed item may be provided as a blank and as illustrated in FIG. 6, the possible list of the detailed item may also be proposed.

The lower end of FIG. 19 illustrates the transaction information input screen provided when the disposal of the short-term financial instruments is selected for the accounting period. If the user inputs the amount of the cash and deposits due to the disposal of the short-term financial instruments, the loss amount or the amount of profit may be automatically input to the loss on sale of financial instruments of the credit side or the loss on sale of financial instruments of the debit side depending on the amount of the cash and deposits and the balance of the short-term financial instruments.

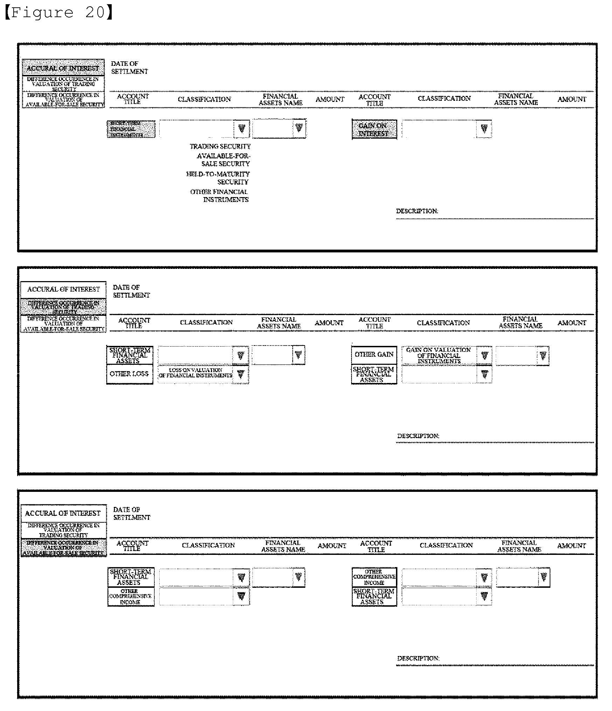

FIG. 20 is a diagram illustrating screens depending on a settlement adjustment type when the settlement of the short-term financial instruments is adjusted in the accounting program according to an exemplary embodiment of the present disclosure. Upon the settlement adjustment of the short-term financial instruments, one of the screens of FIG. 20 may be displayed depending on the required type to guide the input of the user.

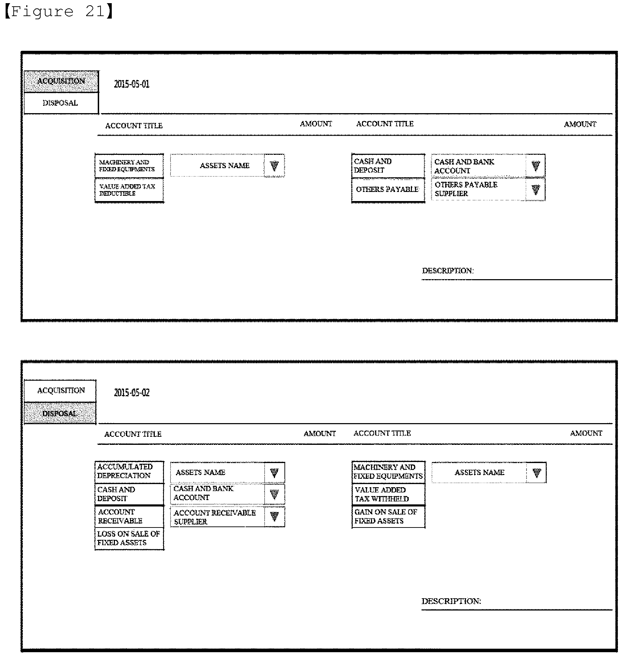

FIG. 21 is a diagram illustrating screens of cases in which acquisition or disposal of machinery and fixed equipment is selected in the accounting program according to an exemplary embodiment of the present disclosure. When the machinery and fixed equipments is acquired, the machinery and fixed equipments and the financial assets name are guided to be input to the debit side and how much the cash and deposits or others payable as cost provided to acquire the machinery and fixed equipments is guided to be input the credit side. When the machinery and fixed equipments are disposed, what the assets name of the disposed machinery and fixed equipments is guided to be input to the credit side and how much the accumulated depreciation of the machinery and fixed equipments is or how much the cash and deposits or the account receivable received through the disposal of the machinery and fixed equipments is guided to be input to the debit side. When the assets name of the disposed machinery and fixed equipments is selected or input, the amount input upon the acquisition of the corresponding machinery and fixed equipments may be automatically input as an amount of the item of the machinery and fixed equipments of the credit side upon the disposal. Further, it is queried how much the accumulated depreciation of the machinery and fixed equipments is by referring the book of the accumulated depreciation of the machinery and fixed equipments depending ton the assets name and thus the accumulated depreciation may be automatically input as the amount of the accumulated depreciation of the debit side. If the accumulated depreciation, the cash and deposits, the others payable, the machinery and fixed equipments, and the amount of the value added tax withheld are automatically or manually input, the amount may be automatically input to the gain on sale of fixed assets or the loss on sale of fixed assets depending on the balance between the amounts of the debit side and the credit side.

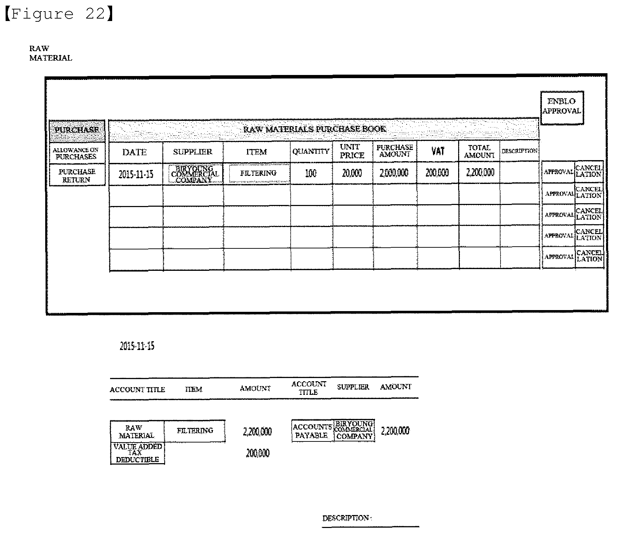

FIG. 22 is a diagram illustrating screens of cases in which a purchase of raw materials is selected in the accounting program according to an exemplary embodiment of the present disclosure.

The account type belongs to the book input, and the raw material is selected in the integrated trial balance and when the raw material purchase is selected, the transaction information input screen is not presented but the book input screen is presented (upper end portion of FIG. 22). If the detailed items are input / stored in the raw material purchase book, the transaction information input screen like the lower end portion of FIG. 22 may be completed depending on the input / stored information and displayed. As the account title that is the book input as the account type so as to be input by the above method, there may be sales, purchase, salary, depreciation, etc.

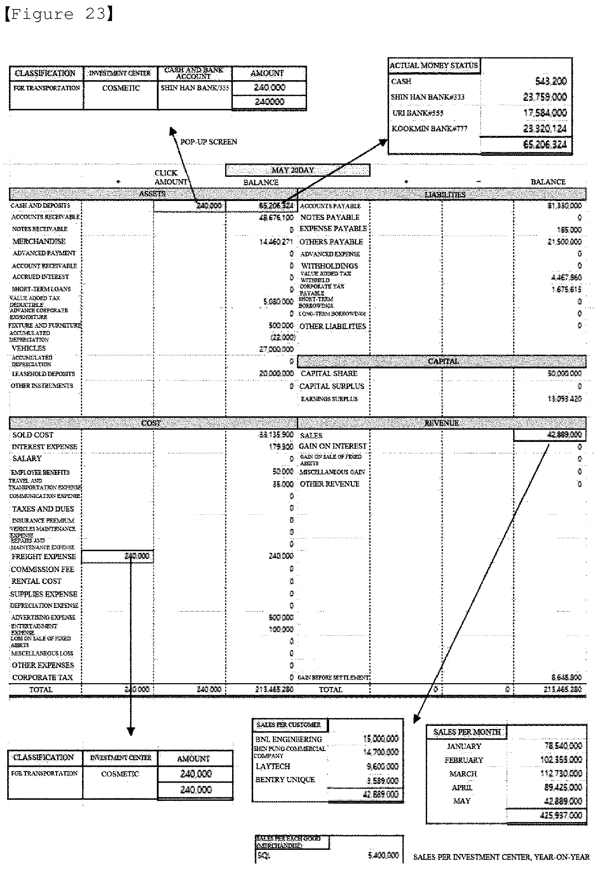

FIG. 23 is a diagram for describing screens of detailed information that may be derived from an integrated trial balance of the accounting program according to an exemplary embodiment of the present disclosure. If the increased amount, the decreased amount, or the balance of each account time in the integrated trial balance illustrated in FIG. 23 is clicked, more detailed information on the corresponding account title may be displayed on a new window or screen. For example, if the decreased amount of the cash and deposits is clicked, the history on how much the cash and deposits are decreased may be shown along with the detailed item, the investment center, the cash / bank account, and the information on the amount in each transaction. If the balance of the cash / deposits is clicked, the actual money status of the cash and deposits may be displayed. That is, it may be displayed in what form (for example, in which account) and how much the cash and deposits remain If the balance of sales is clicked, sales per customer and supplier, sales per month, or sales per merchandise may be displayed. If the balance of sales is clicked, a query occurs to select how much the sales are displayed by the selection of the user or the contents displayed when the balance of the sales is clicked may be determined depending on the preset matters.

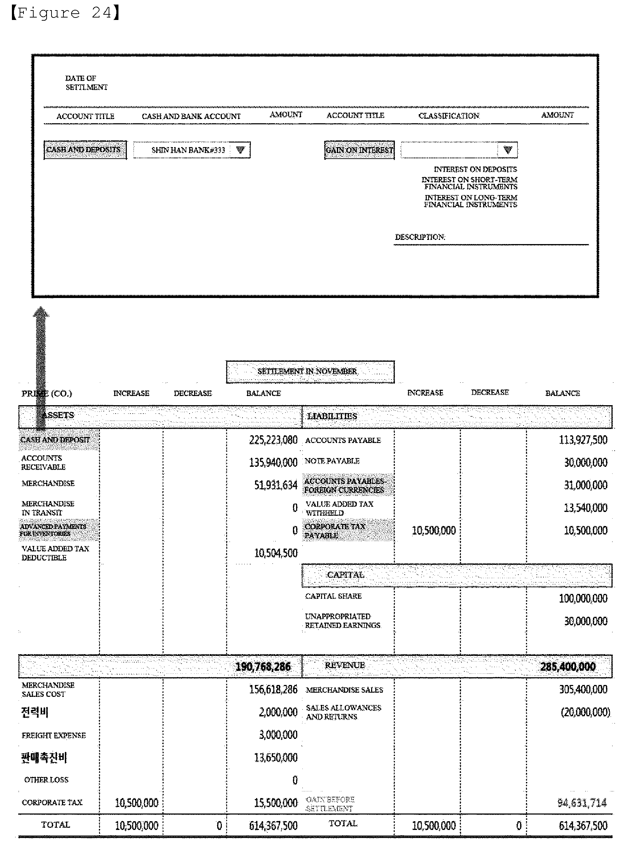

FIG. 24 is a diagram for describing screens that may be displayed upon a settlement mode in the integrated trial balance of the accounting program according to an exemplary embodiment of the present disclosure.

After various transactions are recorded in the integrated trial balance by the recording mode for the accounting period, if the settlement period arrives, the settlement mode may start. The user may click the "settlement" button displayed along with the integrated trial balance to start the settlement mode. Alternatively, the user enters a menu and thus clicks the settlement menu or uses a keyboard shortcut, thereby starting the settlement mode. If the settlement mode is selected, the identification display such as the shade display as illustrated in FIG. 12 may be performed on the account titles requiring the settlement adjustment. If the shaded account title is selected, the items required for the settlement adjustment are displayed and thus the user may input the required information. For example, if the cash and deposits are clicked, the screen displayed at the upper end portion of FIG. 12 appears to guide the user to input the amount of the gain on interest.

Further, a function of displaying priority on items to be first processed among the settlement items may be performed based on the settlement adjustment attribute database or the account attribute database. If the account title to be processed prior to the selected account title upon the settlement mode is present, a method for popping-up an information window, etc., may also be used. The accounting program of the present disclosure guides the user to perform all the settlement adjustments in an appropriate order without omission by the settlement mode function.

As described above, the user without sufficient accounting acknowledge may appropriately perform the accounting process and the executives may easily confirm the financial status all the time, by the accounting program based on the integrated trial balance creatively devised and described in the present disclosure.

Although the forgoing text sets forth a detailed description of numerous different embodiments, it should be understood that the scope of the patent is defined by the words of the claims set forth at the end of this patent. The detailed description is to be construed as exemplary only and does not describe every possible embodiment because describing every possible embodiment would be impractical, if not impossible. Numerous alternative embodiments could be implemented, using either current technology or technology developed after the filing date of this patent, which would still fall within the scope of the claims.

Thus, many modifications and variations may be made in the techniques and structures described and illustrated herein without departing from the spirit and scope of the present claims. Accordingly, it should be understood that the methods and apparatus described herein are illustrative only and are not limiting upon the scope of the claims.

**Claims**

1. A method for an accounting process using an integrated trial balance executed by a processor, comprising:

   presenting the integrated trial balance, the integrated trial balance including a first column and a second column, the first column displaying information on an asset, the second column displaying information on a liability and a capital, the information on the asset, the liability, and the capital including account titles belonging to the asset, the liability, and the capital and values associated with each account title, the integrated trial balance having a recording mode and a settlement mode, if at least some of the account titles on the integrated trial balance are selected in the recording mode, a transaction information input process of the corresponding account title starting, and if at least some of the account titles on the integrated trial balance are selected in the settlement mode, a settlement adjustment process of the corresponding account title starting;
   receiving a first select signal selecting one of the account titles displayed in the integrated trial balance in the recording mode;
   presenting transaction types for the selected account titles based on a predetermined account attribute table, the account attribute table including possible transaction types according to the account titles and information on automatic recording contents according to a combination of the account titles and the transaction types;

receiving a second select signal selecting one of the presented transaction types; and

presenting a transaction information input screen generated depending on the account attribute table based on the selected account titles and transaction type, the transaction information input screen including a debit side and a credit side and the automatic recording contents determined depending on the account attribute table being automatically input to at least one of the debit side and the credit side and being displayed.

2. The method of claim 1,

wherein the processor enables information on the progress status associated with the selected account title to be included in the account title attribute table and, if the information on progress is set to a predetermined state, renewal of the information on progress to be automatically performed, and

the selected account title associated with the information on progress status comprises at least one of an account title associated with promissory note, an account title associated with loan, and an account title associated with debt of a predetermined period.

3. The method of claim 1,

wherein the account titles and an increased amount, a decreased amount, and a balance for the account titles are displayed in both of the first column and the second column of the integrated trial table.

4. The method of claim 1,

wherein the debit side and the credit side of the transaction information input screen each includes an amount input blank for each account title,

the method further comprising:

confirming whether a total of amounts input to all amount input blank of the debit side is equal to a total of amounts input to all amount input blank of the credit side; and

generating an alarm when the total of the amounts input to all amount input blank of the debit side is not equal to the total of the amounts input to all amount input blank of the credit side.

5. The method of claim 1,

wherein the debit side and the credit side of the transaction information input screen each include an amount input blank for each account title,

the method further comprising:

confirming whether a total of the amounts input to all amount input blank of the debit side is equal to a total of the amounts input to all amount input blank of the credit side; and

when a total of amounts of the debit side is equal to a total of amounts of the credit side, updating amount input of each account title to the value of the corresponding account title in the integrated trial balance.

6. The method of claim 1, further comprising:

prior to the presenting of the integrated trial balance,

receiving a business select signal for a business field; and

configuring the integrated trial balance with account titles to be used in the selected business field depending on a predetermined business attribute table, based on the business select signal.

7. The method of claim 1, further comprising:

after the presenting of the transaction information input screen,

receiving a settlement mode signal;

generating an identification mark for the account titles requiring the settlement adjustment among the account titles in the integrated trial balance; and

displaying matters to be input by a user for the corresponding account title depending on a predetermined settlement adjustment table if one of the account titles for which the identification mark is generated is selected.

8. The method of claim 1, when a product is selected in an account title of the first column and the product is stocked in different amounts over a predetermined number of times, thus including a decimal point in the unit cost of the product, further comprising dropping the values after the decimal point and setting an amount of loss based on the dropped amount below the decimal point.

9. The method of claim 1, when the amount associated with said account title is fluctuated due to an exchange rate, further comprising reflecting and updating the fluctuated value due to the exchange rate in the settlement mode.

10. An apparatus for an accounting process using an integrated trial balance, comprising:

a memory storing an account attribute table including possible transaction types according to account titles and information on automatic recording contents according to a combination of the accounts and the transaction types; and
a processor connected to the memory,
wherein the processor performs an operation of presenting the integrated trial balance to a user device, the integrated trial balance including a first column and a second column, the first column displaying information on an asset, the second column displaying information on a liability and a capital, the information on the asset, the liability, and the capital including account titles belonging to the asset, the liability, and the capital and values associated with each account title, the integrated trial balance having a recording mode and a settlement mode, if at least some of the account titles on the integrated trial balance are selected in the recording mode, a transaction information input process of the corresponding account title starting, and if at least some of the account titles on the integrated trial balance are selected in the settlement mode, a settlement adjustment process of the corresponding account title starting, and the processor performs an operation of receiving a select signal selecting one of the account titles and one of the transaction types of the corresponding account title displayed in the integrated trial table in the recording mode and presenting a transaction information input screen generated according to the account attribute table based on the selected account titles and transaction types, the transaction information input screen including a debit side and a credit side and the automatic recording contents determined depending on the account attribute table being automatically input to at least one of the debit side and the credit side and being displayed.

11. The apparatus of claim 10,
wherein the processor enables information on progress status associated with the selected account title to be included in the account title attribute table and, if the information on progress status is set to a predetermined state, renewal of the information on progress to be automatically performed, and
the selected account title associated with the information on progress status comprises at least one of an account title associated with promissory note, an account title associated with loan, and an account title associated with debt of a predetermined period.

12. The apparatus of claim 10,
wherein when a product is selected in an account title of the first column and the product is entered in different amounts over a predetermined number of times, thus including a decimal point in the unit cost of the product, the processor enables the values after the decimal point to be dropped and sets an amount of loss based on the dropped amount below the decimal point.

13. The apparatus of claim 10, wherein when the amount associated with said account title is fluctuated due to an exchange rate, the fluctuated value due to the exchange rate in the settlement mode is reflected to update the amount.

14. The apparatus of claim 10, wherein the debit side and the credit side of the transaction information input screen each include an amount input blank for each account title, and
the operation further includes:

confirming whether a total of the amounts input to all amount input blank of the debit side is equal to a total of the amounts input to all amount input blank of the credit side; and
generating an alarm when the total of the amounts input to all amount input blank of the debit side is not equal to the total of the amounts input to all amount input blank of the credit side.

15. The apparatus of claim 10,
wherein the operation further includes:

prior to the presenting of the integrated trial balance, receiving a business select signal for a business field; and
configuring the integrated trial balance using account titles to be used in the business field selected depending on a predetermined business attribute table, based on the business select signal.

【Figure 1】

【Figure 2】

## INPUT OF GENERAL STATEMENT

DATE [   ] YEAR [ ] ˙ MONTH [   ] DAY    CASH BALANCE: 1,016,627,393 WON

| DAY | NO. | DIVISION | CODE | ACCOUNT TITLE | CODE | SUPPLIER | DESCRIPTION | DEBIT SIDE | CREDIT SIDE | EVIDENCE |
|---|---|---|---|---|---|---|---|---|---|---|
| 1 | 0000 | PAYMENT | 153 | RAW MATERIAL | 0101 | AA COMMERCIAL COMPANY | 06 DEEMED INPUT TAX, RAW MATERIAL SUBTRACTION | 1,000,000 | | |
| 1 | 0000 | DEBIT SIDE | 251 | ACCOUNTS PAYABLE | 0101 | AA COMMERCIAL COMPANY | 02 ACCOUNTS PAYABLE REPAYMENT, ISSUE NOTE | 12,312,312 | | |
| 1 | 0000 | CREDIT SIDE | 252 | NOTE PAYABLE | 0101 | AA COMMERCIAL COMPANY | 7I0000001-ISSUE-[MATURITY DATE] | | 12,312,312 | |
| 2 | 0000 | DEBIT SIDE | 103 | ORDINARY ACCOUNT | 3021 | BB BANK 363680 | 01 ACCOUNTS RECEIVABLE, ORDINARY ACCOUNT | 1,278,245 | | |
| 2 | 0000 | CREDIT SIDE | 108 | ACCOUNTS RECEIVABLE | 0101 | AA COMMERCIAL COMPANY | DD INDUSTRY, GOLD | | 5,858,845 | |
| 2 | 0000 | CREDIT SIDE | 108 | ACCOUNTS RECEIVABLE | 0102 | CC DISTRIBUTION | DD EXPPORT PACKING | | 1,728,460 | |
| 2 | 0000 | CREDIT SIDE | 108 | ACCOUNTS RECEIVABLE | 0103 | CC TRADING COMPANY | DD WINTECH DEPOSIT | | 4,500,000 | |
| 2 | 0002 | DEBIT SIDE | 821 | INSURANCE PREMIUM | 0104 | CC TRADING COMPANY | 4,655,000,000 E 721-28-29 | 1,337,630 | | |
| 2 | 0002 | DEBIT SIDE | 253 | OTHERS PAYABLE | 0105 | CC INC. | 01 UPON OTHERS PAYABLE, ORDINARY WITHDRAWAL | 53,100 | | |
| 2 | 0002 | DEBIT SIDE | 253 | OTHERS PAYABLE | 0106 | DD INC. | 01 UPON OTHERS PAYABLE, ORDINARY WITHDRAWAL | 91,116 | | |
| 2 | 0003 | CREDIT SIDE | 103 | ORDINARY ACCOUNT | 3021 | BB BANK 363680 | ACCOUNT TRANSFER | | 8,500,846 | |
| 2 | 0003 | DEBIT SIDE | 103 | ORDINARY ACCOUNT | 3021 | BB BANK 363680 | 01 ACCOUNTS RECEIVABLE, ORDINARY ACCOUNT | 60,000,000 | | |
| 2 | 0003 | CREDIT SIDE | 108 | ACCOUNTS RECEIVABLE | 0107 | CC ELECTRON | DD DEPOSIT | | 60,000,000 | |
| 2 | 0004 | DEBIT SIDE | 253 | OTHERS PAYABLE | 0108 | CC ELECTRON | 01 UPON OTHERS PAYABLE, ORDINARY WITHDRAWAL | 668,154 | | |
| 2 | 0004 | CREDIT SIDE | 103 | ORDINARY ACCOUNT | 3021 | BB BANK 363680 | AUTOMATIC PAYMENT | | 668,154 | |
| 2 | 0005 | DEBIT SIDE | 831 | COMMISSION FEE | 3597 | KOREA CC BANK 24001 | 98 | 1,000 | | |
| | SELECTED STATEMENT SUM | | | | | | | 1,000,000 | 1,000,000 | |
| | TOTAL AMOUNT | | | | | | | 6,708,172,588 | 6,708,172,588 | |

【Figure 3】

TOTAL TRIAL BALANCE

PERIOD  2013 년 12 월 31 일

| DEBIT SIDE | | ACCOUNT TITLE | CREDIT SIDE | |
|---|---|---|---|---|
| BALANCE | TOTAL AMOUNT | | TOTAL AMOUNT | BALANCE |
| 9,409,496,044 | 23,538,031,438 | ◄ ► | 14,130,574,586 | 50,039,152 |
| 6,309,685,216 | 20,398,340,610 | ◁CHECKING ASSET▷ | 14,138,087,891 | 46,551,697 |
| 1,113,218,940 | 1,430,092,541 | CASH | 316,873,501 | |
| 192,500 | 392,500 | CHECKING ACCOUNTS | 200,000 | |
| 162,656,096 | 6,712,325,849 | ORDINARY ACCOUNT | 6,539,670,753 | |
| 14,869,107 | 24,850,833 | FOREIGN CURRENT DEPOSIT | 9,981,726 | |
| 84,439,425 | 84,439,425 | TERM DEPOSITS - INSTALLMENT SAVINGS | | |
| 3,767,589,309 | 9,310,439,101 | ACCOUNTS RECEIVABLE | 5,542,929,792 | |
| | | ALLOWANCE FOR DOUBTFUL DEBTS | 47,664,337 | 47,664,337 |
| 375,657,826 | 2,012,482,214 | NOTES RECEIVABLE | 1,636,824,388 | |
| | | ALLOWANCE FOR DOUBTFUL DEBTS | 887,360 | 887,360 |
| 21,450,000 | 21,450,000 | ACCOUNT RECEIVABLE | | |
| 664,000 | 664,000 | FOREIGNER DEPOSITS FOR SEVERANCE INSURANCE | | |
| 263,879,402 | 230,107,266 | ADVANCED PAYMENTS | 26,228,864 | |
| 8,925,420 | 6,925,420 | ADVANCE EXPENSE | | |
| 18,384,970 | 18,384,970 | SUSPENSE PAYMENT | | |
| 406,934,627 | 406,934,627 | VALUE ADDED TAX DEDUCTIBLE | | |
| 29,425,930 | 29,425,930 | PREPAYMENT TAX | | |
| 31,600,000 | 40,000,000 | STOCKHOLDER, EXECUTIVES, EMPLOYEES SHORT-TERM BOND | 8,400,000 | |
| 22,191,176,934 | 62,184,535,214 | TOTAL AMOUNT | 62,184,535,214 | 22,191,176,834 |

【Figure 4】

```
        ┌─────────────────────────────┐
        │    SELECT BUSINESS FIELD     │
        └─────────────────────────────┘
                      │
                      ▼
    ┌─────────────────────────────────────┐
    │        CONFIGURE AND DISPLAY         │
    │       INTEGRATED TRIAL BALANCE       │
    └─────────────────────────────────────┘
                      │
                      ▼
        ┌─────────────────────────────┐
        │        SELECT ACCOUNT        │
        │     TITLE CORRESPONDING      │
        │        TO TRANSACTION        │
        └─────────────────────────────┘
                      │
                      ▼
        ┌─────────────────────────────┐
        │      SELECT TRANSACTION      │
        │      TYPE CORRESPONDING      │
        │        TO TRANSACTION        │
        └─────────────────────────────┘
                      │
                      ▼
    ┌─────────────────────────────────────┐
    │    INPUT AND STORE TRANSACTIONAL     │
    │        INFORMATION TO AND IN         │
    │      TRANSACTIONAL INFORMATION       │
    │      INPUT SCREEN CONFIGURED         │
    │  DEPENDING ON TRANSACTIONAL TYPE     │
    └─────────────────────────────────────┘
                      │
                      ▼
        ┌─────────────────────────────┐
        │      UPDATE INTEGRATED       │
        │        TRIAL BALANCE         │
        └─────────────────────────────┘
                      │
                      ▼
            ┌───────────────────┐
            │       START       │
            │    SETTLEMENT     │
            └───────────────────┘
                      │
                      ▼
  ┌───────────────────────────────────────────┐
  │   DISPLAY ACCOUNT TITLE REQUIRING          │
  │      SETTLEMENT ADJUSTMENT                  │
  └───────────────────────────────────────────┘
                      │
                      ▼
  ┌───────────────────────────────────────────┐
  │  INPUT AND STORE SETTLEMENT STUFFS OF      │
  │     CORRESPONDING ACCOUNT TITLE            │
  └───────────────────────────────────────────┘
```

【Figure 5】

| EYEcount | | | | 2015-11-15 Log-in ID : Smith | | Log-out | Menual / FAQ / Q&A |

| Accounts | Increase | decrease | Balance | Accounts | Increase | decrease | Balance | |
|---|---|---|---|---|---|---|---|---|
| **Assets** | | | | **Liabilities** | | | | Calender |
| Cash and deposit | | | 0 | Accounts payable | | | 0 | |
| Accounts receivable | | | 0 | Advanced receipts from custom | | | 0 | Duration |
| (Allowance for doubtful accoun | | | 0 | Selling & admin. expenses pay | | | 0 | Inquary |
| Finished goods | | | 0 | Manufacturing costs payble | | | 0 | Registration |
| Work in process | | | 0 | Withholdings | | | 0 | & Accounts |
| Raw materials | | | 0 | Others payable | | | 0 | |
| Advanced payments for invent | | | 0 | Value added tax withheld | | | 0 | Settlement |
| Others receivable | | | 0 | Corporate income taxes payabl | | | 0 | |
| Revenues receivable | | | 0 | Suspense receipts | | | 0 | Financial |
| Value added tax deductible | | | 0 | Short-term borrowings | | | 0 | Statements |
| Prepaid corporate income taxe | | | 0 | Other cunnunt liabilities | | | 0 | Self-Entry |
| Suspens payments | | | 0 | Long-term borrowings | | | 0 | |
| Short-term loans | | | 0 | Other non-current liabilities | | | 0 | |
| Other current assets | | | 0 | **Owners' Equity** | | | | |
| Land | | | 0 | Capital share | | | 0 | |
| Buildings and building fixtures | | | 0 | Capital surplus | | | 0 | |
| (Accumultaed depreciation) | | | 0 | Unappropriated retained earnin | | | 0 | |
| Machinery and fixed equipmen | | | 0 | **Revenues** | | | | |
| (Accumultaed depreciation) | | | 0 | Finished goods sales | | | 0 | |
| Vehicles | | | 0 | (Sales allowances and returns) | | | 0 | |
| (Accumultaed depreciation) | | | 0 | Interest revenue | | | 0 | |
| Fixture & furniture | | | 0 | Other revenues | | | 0 | |
| (Accumultaed depreciation) | | | 0 | Gain on sale of fixed assets | | | 0 | |
| Other tangible assets | | | 0 | Other gains | | | 0 | |
| Guarantee depostis | | | 0 | **( Expenses )** | | | | |
| Other non-current assets | | | 0 | Cost of finished goods sold | | | 0 | |
| | | | | Salaries | | | 0 | |
| | | | | Severance allowance | | | 0 | |
| **Manufacturing Costs** | | | | Employee benefits | | | 0 | |
| Raw materials cost | | | 0 | Travel & transportation expens | | | 0 | |
| Labor cost | | | 0 | Entertainment expense | | | 0 | |
| Severance labor cost | | | 0 | Communication expense | | | 0 | |
| Benefits csot | | | 0 | Taxes & dues | | | 0 | |
| Water & heat cost | | | 0 | Water & heat expense | | | 0 | |
| Electric power cost | | | 0 | Electric power charge | | | 0 | |
| Depreciation cost | | | 0 | Insurance premium | | | 0 | |
| Repairs & maintenance cost | | | 0 | Vehicles maintenance expense | | | 0 | |
| Commission cost | | | 0 | Freight expense | | | 0 | |
| Taxes & dues cost | | | 0 | Commission fee | | | 0 | |
| Supplies cost | | | 0 | Rental expense | | | 0 | |
| Vehicles maintenance cost | | | 0 | Supplies expense | | | 0 | |
| Communicanion cost | | | 0 | Depreciation expense | | | 0 | |
| Freight cost | | | 0 | Bad debt expense | | | 0 | |
| Quality control cost | | | 0 | Sales promotion expense | | | 0 | |
| Outsourcing conversion cost | | | 0 | Other selling & admin. expense | | | 0 | |
| Insurance cost | | | 0 | Interest expense | | | 0 | |
| Rental cost | | | 0 | Loss on sale of fixed assets | | | 0 | |
| Other overhead costs | | | 0 | Other losses | | | 0 | |
| | | | | Corporate income taxes | | | 0 | |
| | | | | Earings before settlement | | | 0 | |
| Total Assets | | | | Total Liabilities and Equity | | | | |

【Figure 6】

【Figure 7】

【Figure 8】

Cancel 810  Register 820  Use 830  Complete 840

→ Possible
----→ Impossible

【Figure 9】

910

940

List of notes

Total 2 notes are registered

| Use | Note drawer | Note number. |
|-----|-------------|--------------|
| ☑ | AppleKorea | xxxx xxxx |
| ☑ | Eye Counting | xxxx xxxx |

920a
920b

930

【Figure 10】

| | | 0 | 0 | 0 | Advance received |
|---|---|---|---|---|---|

Note payable

Deliver note | Repay

【Figure 11】

**Note receivable**

| Receive note | Discount note | Endorse note | Collection in cash |

Any sales are recorded on credit

| Date | Account | | Amount |
| 2017-01-24 | Note receivable | Note ▽ | ₩ |

New registration

2. Fix amount after selection

Note receivable registration
| Note number. | |
| Note drawer | |
| Note date | Calendar |
| Expiry | Calendar |
| Amount | 1,20 |

1. Select

【Figure 12】

**Note receivable**

| Receive note | Discount note | Endorse note | Collection in cash |

Any sales are recorded on credit.
Interest cost and other loss ~ collection of credit card sales,
cash discount of sales, transfer of account receivable

| Date | Account | | Amount |
| 2017-01-24 | Cash Deposit | Cash/bank account ▽ | ₩ |
| | Interest cost | Note discounting rate | ₩ |

【Figure 13】

| Account | | | Amount |
| Note receivable | Customer ▽ | Expiry ▽ | ₩ |

26

【Figure 14】

Short-term loan

| Loan | Repay |

| Account | Amount |

Short-term loan [Detailed item ▽] [ Expiry ▽] [₩| ]

【Figure 15】

| Loan registration | |
|---|---|
| Lenders | |
| Amount | (Currency and amount) |
| Date of loan | |
| Expiry | |
| Interest rate | % |
| Status | |
| Detailed information | |

【Figure 16】

Short-term loan

| Loan | Repay |

| Account | Amount |

Short-term loan [ Detailed item ▽ ] [ Expiry ▽ ] [₩| ]

【Figure 17】

Short-term loan

Loan | Repay

Any sales are recorded on credit

2. Fix amount after selection

| Date | Account | | Amount |
|---|---|---|---|
| 2017-01-24 | Cash Deposit | Cash/bank account ▽ | ₩ |

Loan

New registration

Use only if the status is "1. Register"
Not use in cases of 0. Cancel, 2. Use, 3. Complete

1. Select

| Loan registration | |
|---|---|
| Lenders | |
| Amount | $1,200 |
| Date of loan | |
| Expiry | |
| Interest rate | % |
| Status | |
| Detailed information | |

【Figure 18】

Short-term loan

Loan | Repay

Any sales are recorded on credit

| Date | Account | | | Amount |
|---|---|---|---|---|
| 2017-01-24 | Short-term loan | Detailed items ▽ | Expiry ▽ | ₩ |

28

【Figure 19】

【Figure 20】

【Figure 21】

| ACQUISITION | 2015-05-01 | | | | |
|---|---|---|---|---|---|
| DISPOSAL | | | | | |

| ACCOUNT TITLE | | AMOUNT | ACCOUNT TITLE | | AMOUNT |
|---|---|---|---|---|---|
| MACHINERY AND FIXED EQUIPMENTS | ASSETS NAME ▼ | | CASH AND DEPOSIT | CASH AND BANK ACCOUNT ▼ | |
| VALUE ADDED TAX DEDUCTIBLE | | | OTHERS PAYABLE | OTHERS PAYABLE SUPPLIER ▼ | |

DESCRIPTION:

| ACQUISITION | 2015-05-02 | | | | |
|---|---|---|---|---|---|
| DISPOSAL | | | | | |

| ACCOUNT TITLE | | AMOUNT | ACCOUNT TITLE | | AMOUNT |
|---|---|---|---|---|---|
| ACCUMULATED DEPRECIATION | ASSETS NAME ▼ | | MACHINERY AND FIXED EQUIPMENTS | ASSETS NAME ▼ | |
| CASH AND DEPOSIT | CASH AND BANK ACCOUNT ▼ | | VALUE ADDED TAX WITHHELD | | |
| ACCOUNT RECEIVABLE | ACCOUNT RECEIVABLE SUPPLIER ▼ | | GAIN ON SALE OF FIXED ASSETS | | |
| LOSS ON SALE OF FIXED ASSETS | | | | | |

DESCRIPTION:

【Figure 22】

RAW
MATERIAL

| PURCHASE | | | RAW MATERIALS PURCHASE BOOK | | | | | | | | ENBLO APPROVAL | |
|---|---|---|---|---|---|---|---|---|---|---|---|---|
| ALLOWANCE ON PURCHASES | DATE | SUPPLIER | ITEM | QUANTITY | UNIT PRICE | PURCHASE AMOUNT | VAT | TOTAL AMOUNT | DESCRIPTION | | | |
| PURCHASE RETURN | 2015-11-15 | BIRYOUNG COMMERCIAL COMPANY | FILTERING | 100 | 20,000 | 2,000,000 | 200,000 | 2,200,000 | | | APPROVAL | CANCEL-LATION |
| | | | | | | | | | | | APPROVAL | CANCEL-LATION |
| | | | | | | | | | | | APPROVAL | CANCEL-LATION |
| | | | | | | | | | | | APPROVAL | CANCEL-LATION |
| | | | | | | | | | | | APPROVAL | CANCEL-LATION |

2015-11-15

| ACCOUNT TITLE | ITEM | AMOUNT | ACCOUNT TITLE | SUPPLIER | AMOUNT |
|---|---|---|---|---|---|
| RAW MATERIAL | FILTERING | 2,200,000 | ACCOUNTS PAYABLE | BIRYOUNG COMMERCIAL COMPANY | 2,200,000 |
| VALUE ADDED TAX DEDUCTIBLE | | 200,000 | | | |

DESCRIPTION ·

【Figure 23】

| CLASSIFICATION | INVESTMENT CENTER | CASH AND BANK ACCOUNT | AMOUNT |
|---|---|---|---|
| FOR TRANSPORTATION | COSMETIC | SHIN HAN BANK/355 | 240,000 |
| | | | 240,000 |

POP-UP SCREEN

| ACTUAL MONEY STATUS | |
|---|---|
| CASH | 543,200 |
| SHIN HAN BANK#333 | 23,759,000 |
| URI BANK#555 | 17,584,000 |
| KOOKMIN BANK#777 | 23,320,124 |
| | 65,206,324 |

CLICK AMOUNT

MAY 20DAY

| CLASSIFICATION | INVESTMENT CENTER | AMOUNT |
|---|---|---|
| FOR TRANSPORTATION | COSMETIC | 240,000 |
| | | 240,000 |

| SALES PER CUSTOMER | |
|---|---|
| BNL ENGINEERING | 15,000,000 |
| SHIN PUNG COMMERCIAL COMPANY | 14,700,000 |
| LAYTECH | 9,600,000 |
| BENTRY UNIQUE | 3,589,000 |
| | 42,889,000 |

| SALES PER MONTH | |
|---|---|
| JANUARY | 78,540,000 |
| FEBRUARY | 102,353,000 |
| MARCH | 112,730,000 |
| APRIL | 89,425,000 |
| MAY | 42,889,000 |
| | 425,937,000 |

| SALES PER EACH GOOD (MERCHANDISE) | |
|---|---|
| SQL | 5,400,000 |

SALES PER INVESTMENT CENTER, YEAR-ON-YEAR

33

【Figure 24】

| DATE OF SETTLMENT | | | | | | |
|---|---|---|---|---|---|---|
| ACCOUNT TITLE | CASH AND BANK ACCOUNT | AMOUNT | ACCOUNT TITLE | CLASSIFICATION | | AMOUNT |
| CASH AND DEPOSITS | SHIN HAN BANK#333 ▽ | | GAIN ON INTEREST | ▽ | | |

INTEREST ON DEPOSITS
INTEREST ON SHORT-TERM FINANCIAL INSTRUMENTS
INTEREST ON LONG-TERM FINANCIAL INSTRUMENTS

DESCRIPTION:

SETTLEMENT IN NOVEMBER

| PRIME (CO.) | INCREASE | DECREASE | BALANCE | | INCREASE | DECREASE | BALANCE |
|---|---|---|---|---|---|---|---|
| **ASSETS** | | | | **LIABILITIES** | | | |
| CASH AND DEPOSIT | | | 225,223,080 | ACCOUNTS PAYABLE | | | 113,927,500 |
| ACCOUNTS RECEIVABLE | | | 135,940,000 | NOTE PAYABLE | | | 30,000,000 |
| MERCHANDISE | | | 51,931,634 | ACCOUNTS PAYABLES-FOREIGN CURRENCIES | | | 31,000,000 |
| MERCHANDISE IN TRANSIT | | | 0 | VALUE ADDED TAX WITHHELD | | | 13,540,000 |
| ADVANCED PAYMENTS FOR INVENTORIES | | | 0 | CORPORATE TAX PAYABLE | 10,500,000 | | 10,500,000 |
| VALUE ADDED TAX DEDUCTIBLE | | | 10,504,500 | | | | |
| | | | | **CAPITAL** | | | |
| | | | | CAPITAL SHARE | | | 100,000,000 |
| | | | | UNAPPROPRIATED RETAINED EARNINGS | | | 30,000,000 |
| | | | **190,768,286** | **REVENUE** | | | **285,400,000** |
| MERCHANDISE SALES COST | | | 156,618,286 | MERCHANDISE SALES | | | 305,400,000 |
| 전력비 | | | 2,000,000 | SALES ALLOWANCES AND RETURNS | | | (20,000,000) |
| FREIGHT EXPENSE | | | 3,000,000 | | | | |
| 판매촉진비 | | | 13,650,000 | | | | |
| OTHER LOSS | | | 0 | | | | |
| CORPORATE TAX | 10,500,000 | | 15,500,000 | GAIN BEFORE SETTLEMENT | | | 94,631,714 |
| TOTAL | 10,500,000 | 0 | 614,367,500 | TOTAL | 10,500,000 | 0 | 614,367,500 |

## INTERNATIONAL SEARCH REPORT

| | International application No. |
|---|---|
| | **PCT/KR2017/002646** |

| A. CLASSIFICATION OF SUBJECT MATTER |
|---|
| *G06Q 10/10(2012.01)i, G06Q 40/00(2006.01)i, G06Q 10/06(2012.01)i, G06F 17/30(2006.01)i* |
| According to International Patent Classification (IPC) or to both national classification and IPC |

| B. FIELDS SEARCHED |
|---|
| Minimum documentation searched (classification system followed by classification symbols) |
| G06Q 10/10; G06F 19/00; G06F 3/14; G06Q 10/00; G06Q 40/00; G06Q 10/06; G06F 17/30 |
| |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: account, integration, trial balance, column, recording mode, settling mode, account title, transaction type |

| C. DOCUMENTS CONSIDERED TO BE RELEVANT |
|---|

| Category* | Citation of document, with indication, where appropriate, of the relevant passages | Relevant to claim No. |
|---|---|---|
| Y | KR 10-2012-0124928 A (LEE, Won Ro) 14 November 2012<br>See paragraphs [0011], [0031], [0041], [0203], [0219]-[0228], [0319], [0323], [0331],<br>claim 1 and figures 1-2. | 1-15 |
| Y | JP 2007-183981 A (NIPPON DIGITAL KENKYUSHO K.K.) 19 July 2007<br>See paragraphs [0038], [0041], [0094]-[0095] and figures 4, 10. | 1-15 |
| Y | KR 10-2010-0028704 A (YOO, In Mog et al.) 15 March 2010<br>See claim 1 and figure 2. | 1-15 |
| Y | JP 2007-012026 A (DAN, Toshiro) 18 January 2007<br>See paragraph [0063] and claims 1, 6, 10. | 2,7,9,11,13 |
| A | JP 4560171 B2 (NIPPON DIGITAL KENKYUSHO K.K.) 13 October 2010<br>See claims 1, 3 and figure 1. | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 JUNE 2017 (14.06.2017) | **15 JUNE 2017 (15.06.2017)** |

| Name and mailing address of the ISA/KR<br>Korean Intellectual Property Office<br>Government Complex-Daejeon, 189 Seonsa-ro, Daejeon 302-701,<br>Republic of Korea<br>Facsimile No. +82-42-481-8578 | Authorized officer<br><br><br>Telephone No. |
|---|---|

Form PCT/ISA/210 (second sheet) (January 2015)

INTERNATIONAL SEARCH REPORT
Information on patent family members

International application No.

**PCT/KR2017/002646**

| Patent document cited in search report | Publication date | Patent family member | Publication date |
|---|---|---|---|
| KR 10-2012-0124928 A | 14/11/2012 | KR 10-1275650 B1 | 17/06/2013 |
| JP 2007-183981 A | 19/07/2007 | NONE | |
| KR 10-2010-0028704 A | 15/03/2010 | KR 10-0998427 B1 | 03/12/2010 |
| JP 2007-012026 A | 18/01/2007 | NONE | |
| JP 4560171 B2 | 13/10/2010 | JP 2001-325419 A | 22/11/2001 |

Form PCT/ISA/210 (patent family annex) (January 2015)